# EUROPÄISCHE PATENTSCHRIFT

(11) **EP 0 853 732 B1**
(45) Veröffentlichungstag und Bekanntmachung des Hinweises auf die Patenterteilung: **23.04.2003**
(21) Anmeldenummer: 96934504.0
(22) Anmeldetag: 30.09.1996
(51) Int. Cl.: F16B 19/10

(54) **VERFAHREN UND VORRICHTUNG ZUR ÜBERTRAGUNG VON KRÄFTEN ZWISCHEN ZWEI FÜGETEILEN**
PROCESS AND DEVICE FOR TRANSMITTING FORCES BETWEEN TWO JOINED PIECES
PROCEDE ET DISPOSITIF DE TRANSMISSION DE FORCES ENTRE DEUX PIECES D'ASSEMBLAGE

(30) Priorität: 04.10.1995 DE 19536982
(43) Veröffentlichungstag der Anmeldung: 22.07.1998
(73) Patentinhaber: Deutsches Zentrum für Luft- und Raumfahrt e.V., 51147 Köln (DE)
(72) Erfinder: RÜHLE, Felix, D-71277 Rutesheim (DE); WEIHS, Hendrik, D-72585 Riederich (DE); HALD, Herrmann, D-71229 Leonberg (DE); WINKELMANN, Peter, D-70394 Kernen (DE); HÄNSEL, Detlev, D-70374 Stuttgart (DE)
(74) Vertreter: Beck, Jürgen, Dr. Dipl.-Phys.
(86) Internationale Anmeldenummer: EP9604280
(87) Internationale Veröffentlichungsnummer: WO97013076

(56) Entgegenhaltungen:
- EP-A- 0 185 394
- EP-A- 0 487 890
- DE-A- 3 232 926
- DE-U- 9 409 731
- GB-A- 590 339
- US-A- 2 616 328

## Beschreibung

Die Erfindung betrifft ein Verfahren zur Übertragung von Kräften zwischen zwei Fügeteilen, bei dem man ein Verbindungselement in zwei korrespondierende Öffnungen der beiden Fügeteile einführt, wobei man eine an einem Verbindungskopf des Verbindungselements angeordnete, schräg zur Kraftübertragungsrichtung verlaufende erste Hinterschneidung an eine mit dem ersten Fügeteil in Wirkverbindung stehende erste Anlagefläche anlegt und wobei man einen vom Verbindungskopf ausgehenden Verbindungsschaft in die Öffnung des zweiten Fügeteils einführt, man während des Einführens den Verbindungsschaft, der einen von einer schaftseitigen Endfläche des Verbindungselements ausgehenden, in Kraftübertragungsrichtung verlaufenden und sich bis in Höhe der Aufweitung erstreckenden Längsschlitz umfaßt, im Bereich der Aufweitung zusammendrückt, und wobei man nach dem Einführen des Verbindungsschafts ein den Verbindungsschaft im Bereich der Aufweitung aufspreizendes Spreizelement in eine von einer Endfläche des Verbindungselements ausgehende, in Kraftübertragungsrichtung verlaufende, sich bis in Höhe des Längsschlitzes erstreckende Aufnahme des Verbindungselements einführt.

Ferner betrifft die Erfindung eine Vorrichtung zur Übertragung von Kräften zwischen zwei Fügeteilen mit einem Verbindungselement, das einen Verbindungskopf mit einer schräg zur Kraftübertragungsrichtung verlaufenden ersten Hinterschneidung sowie einen vom Verbindungskopf ausgehenden Verbindungsschaft, welcher eine Aufweitung, die eine der ersten Hinterschneidung zugewandte zweite Hinterschneidung aufweist, und einen von einer schaftseitigen Endfläche des Verbindungselements ausgehenden, in Kraftübertragungsrichtung verlaufenden und sich bis in Höhe der Aufweitung erstreckenden Längsschlitz umfaßt, aufweist, und mit einem den Verbindungsschaft im Bereich der Aufweitung aufspreizenden Spreizelement, das in eine von einer Endfläche des Verbindungselements ausgehende, in Kraftübertragungsrichtung verlaufende, sich bis in Höhe des Längsschlitzes erstreckende Aufnahme des Verbindungselements einführbar ist.

Es sind Vorrichtungen zur Übertragung von Kräften zwischen zwei Fügeteilen mit einem Verbindungselement, das einen Verbindungskopf mit einer schräg zur Kraftübertragungsrichtung verlaufenden ersten Hinterschneidung sowie einen vom Verbindungskopf ausgehenden Verbindungsschaft aufweist, in Form von Schraub- oder Nietverbindungen in großer Zahl bekannt, wobei meist metallische Werkstoffe zum Einsatz kommen, die die bei diesen Vorrichtungen erforderliche elastische Verformbarkeit aufweisen. Der Einsatzbereich dieser Vorrichtungen und der damit verbundenen Verfahren ist allerdings auf Temperaturbereiche unterhalb von etwa 1300° C beschränkt, da die metallischen Werkstoffe bei höheren Temperaturen nicht eingesetzt werden können. Bei höheren Temperaturen kommen üblicherweise keramische Werkstoffe zum Einsatz, diese sind allerdings plastisch nicht verformbar, sehr spröde und neigen beim Auftreten punktförmiger Belastungen zum Brechen. Da herkömmliche Verbindungstechniken entweder den Werkstoff plastisch verformen, wie es beispielsweise bei Nietverbindungen der Fall ist oder auch bei Schraubverbindungen, bei denen auftretende Spannungsspitzen durch plastische Verformung des Werkstoffs abgebaut werden, oder aber vom Werkstoff eine hohe Widerstandskraft gegen Spannungsspitzen erfordern, sind spröde Materialien nur bedingt für herkömmliche Verbindungsmethoden verwendbar.

Aus der EP O 185 394 A2 ist eine Vorrichtung bzw. ein Verfahren zum Verbinden zweier Fügeteile bekannt, bei der bzw. dem ein Verbindungselement mittels eines Spreizelements in radialer Richtung so verformt wird, daß die Außenseite eines Verbindungsschafts gegen eine Durchgangsöffnung des zweiten Fügeteils gepreßt wird.

Aufgabe der Erfindung ist es, ein gattungsgemäßes Verfahren anzugeben, das auch für den Einsatz spröder Materialien geeignet ist.

Diese Aufgabe wird bei einem Verfahren der eingangs beschriebenen Art erfindungsgemäß dadurch gelöst, daß man den Verbindungsschaft so in die Öffnung des zweiten Fügeteils einführt, daß er sich vor Einführen des Spreizelements in die Aufnahme des Verbindungselements wieder aufspreizt und mit der zweiten Hinterschneidung flächig an einer mit dem zweiten Fügeteil in Wirkverbindung stehenden zweiten Anlagefläche anliegt.

Durch den Längsschlitz erreicht man auch bei spröden Materialien eine elastische Verformbarkeit des Verbindungsschafts im Bereich der Aufweitung, so daß man den Verbindungsschaft so weit zusammendrücken kann, daß er in die Öffnung des zweiten Fügeteils einführbar ist. Wird der Verbindungsschaft nicht mehr zusammengedrückt, so spreizt er sich elastisch wieder auf, so daß er mit seiner zweiten Hinterschneidung gegen die mit dem zweiten Fügeteil in Wirkverbindung stehende zweite Anlagefläche drückt. Dabei kann das zweite Fügeteil selbst die mit der zweiten Hinterschneidung korrespondierende zweite Anlagefläche aufweisen, so daß der Verbindungsschaft im Bereich seiner zweiten Hinterschneidung flächenhaft unmittelbar gegen das zweite Fügeteil drückt. Erforderlich ist allerdings nur eine Wirkverbindung zwischen Anlagefläche und Fügeteil dergestalt, daß die von der Hinterschneidung auf die Anlagefläche ausgeübte Kraft auf das Fügeteil übertragen wird. Hierbei kann es sich beispielsweise um eine Druck-, Zug-, Scher- oder Torsionskraft handeln. Da die beiden Hinterschneidungen des Verbindungselements aufeinander zugewandt sind und flächenhaft gegen die mit dem ersten bzw. zweiten Fügeteil in Wirkverbindung stehenden Anlageflächen drücken, werden über die Anlageflächen die beiden Fügeteile gegeneinander gedrückt, ohne daß Spannungsspitzen am Verbindungselement auftreten oder dieses plastisch verformt wird. Zur Herstellung des Verbindungselements können somit auch spröde Materialien verwendet werden.

Die aufgrund der Längsschlitze erfolgende elastische Aufspreizung des Verbindungsschafts im Bereich der Aufweitung läßt sich dadurch verstärken, daß man ein den Verbindungsschaft im Bereich der Aufweitung aufspreizendes Spreizelement in eine von einer Endfläche des Verbindungselements ausgehende, in Kraftübertragungsrichtung verlaufende, sich bis in Höhe des Längsschlitzes erstreckende Aufnahme des Verbindungselements einführt. Die Aufnahme im Bereich des Längsschlitzes ermöglicht es, das Spreizelement so weit in das Verbindungselement einzuführen, daß die Aufweitung des Verbindungsschafts zusätzlich zu der elastischen Verformung aufgrund des Längsschlitzes in radiale Richtung ausgedehnt wird. Dadurch lassen sich besonders große Kräfte zwischen den beiden Fügeteilen übertragen.

Um die elastische Verformbarkeit des Verbindungselements zu steigern, ist es günstig, wenn man ein mehrere, einander quer zur Kraftübertragungsrichtung mittig überkreuzende Längsschlitze aufweisendes Verbindungselement verwendet.

Die auf das Verbindungselement einwirkenden Kräfte werden besonders übersichtlich und die zu seiner Dimensionierung erforderlichen Berechnungen werden entsprechend kostengünstiger, wenn man ein rotationssymmetrisch ausgestaltetes Verbindungselement verwendet.

Die in die beiden Fügeteile einzubringenden korrespondierenden Öffnungen lassen sich in kostengünstig herstellbarer Weise in Form von Durchgangsbohrungen einbringen, wenn man einen zylinderförmig ausgestalteten Verbindungsschaft verwendet.

Die Kosten zur Dimensionierung des Verbindungselements und zur Herstellung einer der zweiten Hinterschneidung entsprechenden zweiten Anlagefläche lassen sich außerdem dadurch senken, daß man eine kegelstumpfförmig ausgebildete Aufweitung verwendet, die einen Konus bildet.

Der erforderliche Konuswinkel ergibt sich durch Abwägung zweier gegenläufiger Tendenzen. Um eine große Belastbarkeit der Verbindung zu erzielen, ist es wünschenswert, eine möglichst große Hinterschneidung, d.h. einen möglichst großen Konuswinkel zu verwenden. Andererseits erfordert ein großer Konuswinkel eine entsprechend große elastische Verformbarkeit des Verbindungsschafts, da dieser in Höhe der Aufweitung beim Einführen in die Öffnung des zweiten Fügeteils entsprechend stark zusammengedrückt werden muß. Für die Montage des Verbindungselements wäre es dementsprechend wünschenswert, einen möglichst kleinen Konuswinkel zu verwenden. Es hat sich überraschenderweise gezeigt, daß bereits ein Konuswinkel im Bereich zwischen ungefähr 2° bis ungefähr 8° ausreicht, um die erforderliche Belastbarkeit der Verbindung zu erzielen.

Ein besonders günstiger Konuswinkel ergibt sich im Bereich von etwa 3° bis etwa 5°. Insbesondere bei spröden Materialien, deren elastische Verformbarkeit begrenzt ist, läßt sich bei einem derartigen Konuswinkel eine einfache Montage und gleichzeitig eine hohe Belastbarkeit erzielen.

Bei einer vorteilhaften Ausführungsform des Verfahrens ist vorgesehen, daß ein Verbindungselement mit einem Verbindungskopf verwendet wird, der einen vom kopfseitigen Ende des Verbindungselements ausgehenden, in Kraftübertragungsrichtung verlaufenden und sich bis in Höhe der ersten Hinterschneidung erstreckenden Längsschlitz umfaßt. Auf diese Weise wird auch im Bereich des Verbindungskopfes eine elastische Verformbarkeit erzielt, so daß sowohl der Verbindungskopf als auch der Verbindungsschaft zusammengedrückt und in entsprechende Öffnungen der Fügeteile eingeführt werden können. Aufgrund der durch die Längsschlitze erzielten elastischen Verformbarkeit spreizen sich nach der Montage sowohl Verbindungskopf als auch Verbindungsschaft.

Die Montage wird vereinfacht, wenn man ein Verbindungselement verwendet, bei dem nicht darauf geachtet werden muß, auf welcher Seite der Verbindungskopf und auf welcher der Verbindungsschaft angeordnet ist. Eine derartige einfache Montage läßt sich dadurch erzielen, daß man ein Verbindungselement verwendet, bei dem Verbindungskopf und Verbindungsschaft spiegelsymmetrisch zueinander ausgestaltet sind, wobei eine Oberflächennormale der Spiegelebene kolinear zur Kraftübertragungsrichtung verläuft. Dabei ist es vorteilhaft, wenn der am Verbindungskopf angeordnete Längsschlitz quer zu dem am Verbindungsschaft angeordneten Längsschlitz ausgerichtet ist, denn dadurch können sich die Längsschlitze jeweils über mehr als die Hälfte der Länge des Verbindungselements erstrecken, ohne daß sie ineinander übergehen.

Um nach der Montage eine erneute Verformung des Verbindungselements bei sehr großer Belastung zu verhindern, kann vorgesehen sein, daß man nach dem Einführen des Verbindungselements in die Öffnungen der Fügeteile in den Längsschlitz bzw. in die Längsschlitze des Verbindungselements eine verformbare Füllmasse einbringt und anschließend aushärtet. Durch die ausgehärtete Füllmasse verliert das nach dem Einführen aufgespreizte Verbindungselement seine elastische Verformbarkeit. Es bleibt somit auch unter großer Belastung im aufgespreizten Zustand.

Die Anwendung des erfindungsgemäßen Verfahrens ist nicht darauf beschränkt, daß das zweite Fügeteil eine der zweiten Hinterschneidung entsprechende zweite Anlagefläche aufweist. Bei einer besonders bevorzugten Ausgestaltung des erfindungsgemäßen Verfahrens ist vorgesehen, daß man ein Konterelement, das den Verbindungsschaft im Bereich der Aufweitung umhüllt, flächenhaft an den Außenmantel der Aufweitung anlegt. In diesem Fall weist der Konterring die der zweiten Hinterschneidung entsprechende zweite Anlagefläche auf und bildet mit der Aufweitung des Verbindungsschafts einen Formschluß, so daß Spannungsspitzen vermieden werden. Das Konterelement überträgt die von der zweiten Hinterschneidung ausgeübte Kraft auf das zweite Fügeteil.

Als Konterelement kann in kostengünstiger Weise eine Hülse verwendet werden.

Bei Verwendung einer kegelstumpfförmigen Aufweitung am Verbindungsschaft kann ein flächenhaftes Anliegen dadurch erzielt werden, daß man ein Konterelement mit einer sich konisch erweiternden Durchgangsbohrung verwendet, wobei der Konuswinkel der Durchgangsbohrung dem Konuswinkel der Aufweitung entspricht.

Bei einer vorteilhaften Ausgestaltung des Verfahrens ist vorgesehen, daß man ein mit dem zweiten Fügeteil verbindbares Konterelement verwendet. Auf diese Weise läßt sich eine einseitige Montage erzielen, wobei lediglich zuvor das Konterelement mit dem zweiten Fügeteil im Bereich von dessen Öffnung verbunden werden muß. Die Verbindung der beiden Fügeteile wird dann dadurch erzeugt, daß in das erste Fügeteil ein Durchgangskanal eingearbeitet wird, so daß das Verbindungselement durch das erste Fügeteil hindurch in die Öffnung im zweiten Fügeteil eingebracht und in das mit dem zweiten Fügeteil verbundene Konterelement eingeführt wird. Durch die elastische Ausdehnung des Verbindungsschafts wird das Verbindungselement anschließend gegen das Konterelement und dieses gegen das zweite Fügeteil gedrückt.

Bei einer vorteilhaften Ausgestaltung des erfindungsgemäßen Verfahrens, die ebenfalls eine einseitige Montage ermöglicht, ist vorgesehen, daß man ein in eine Öffnung des zweiten Fügeteils einführbares Konterelement verwendet, das quer zur Kraftübertragungsrichtung in mehrere, sich jeweils über einen begrenzten Umfangsbereich erstreckende Segmente unterteilt ist. Durch die Unterteilung lassen sich Radialspannungen in dem Konterelement vermeiden, so daß die radial ausgerichteten Kräfte des sich aufspreizenden Verbindungsschafts unter Beibehaltung ihrer Wirkungslinie auf das das Konterelement umgebende zweite Fügeteil übertragen werden.

Günstig ist es, wenn man eine rotationssymmetrisch ausgebildete Aufnahme verwendet.

Um das Spreizelement besonders einfach in die Aufnahme einführen zu können, ist es von Vorteil, wenn man ein zylinderförmig ausgebildetes Spreizelement verwendet.

Das Spreizelement legt sich beim Einführen an die Mantelfläche der Aufnahme an, so daß diese mit einer Kraft in radialer Richtung beaufschlagt wird. Die Auflagefläche des Spreizelements ist einer besonderen Belastung ausgesetzt. Die auftretende Spannung läßt sich in vorteilhafter Weise reduzieren, wenn man ein kegelstumpfförmig ausgebildetes Spreizelement verwendet, das einen Spreizkonus bildet, denn dadurch ergibt sich ein im wesentlichen flächenhaftes Anliegen des Spreizelements an der Mantelfläche der Aufnahme.

Die zwischen Spreizelement und Aufnahme wirkenden Reibungskräfte, die eine Selbsthemmung des Spreizelements zur Folge haben, lassen sich erhöhen, wenn man ein an seinem Mantel eine Riffelung aufweisendes Spreizelement verwendet.

Insbesondere bei dynamischen Belastungen der Fügeteile ist es vorteilhaft, wenn man ein am Mantel eine Verzahnung aufweisendes Spreizelement verwendet. Durch die Verzahnung wird eine besonders hohe Reibungskraft erzeugt.

Eine besonders sichere Selbsthemmung des Spreizelements innerhalb der Aufnahme läßt sich dadurch bewirken, daß man eine Aufnahme verwendet, deren Wand eine Verzahnung aufweist.

Bei einer alternativen Ausgestaltung des erfindungsgemäßen Verfahrens ist vorgesehen, das Spreizelement nicht allein durch die auftretenden Reibungskräfte zu sichern, sondern dadurch, daß man in die Aufnahme im Bereich zwischen eingeführtem Spreizelement und Endfläche des Verbindungselements eine verformbare Füllmasse einbringt und diese anschließend in der Aufnahme aushärtet. Die ausgehärtete Füllmasse bewirkt eine dauerhafte Sicherung des Spreizelements, insbesondere auch dann, wenn starke dynamische Kräfte zwischen den Fügeteilen übertragen werden.

Bei Verwendung eines Spreizelements läßt sich die Montage dadurch vereinfachen, daß man ein in zwei oder mehr getrennte Segmente unterteiltes Verbindungselement verwendet, indem sich der Längsschlitz durch das Verbindungselement hindurch erstreckt. Die Segmente können bei der Montage aneinandergelegt werden, anschließend werden sie durch das Spreizelement auseinander gespreizt. Da die einzelnen Segmente beim Einführen des Verbindungselements in die Öffnungen der Fügeteile nicht verformt werden müssen, ist eine derartige Ausgestaltung des erfindungsgemäßen Verfahrens besonders gut für den Einsatz sehr spröder Materialien geeignet.

Wird ein in zwei oder mehr getrennte Segmente unterteiltes Verbindungselement verwendet, so läßt sich mit Hilfe des Spreizelements eine flächenhafte Anlage des Verbindungselements an den mit den beiden Fügeteilen in Wirkverbindung stehenden Anlageflächen allein durch die Aufspreizung des Verbindungselements aufgrund des Spreizelements bewirken, ohne daß es erforderlich ist, daß Verbindungskopf und Verbindungsschaft jeweils eine Hinterschneidung aufweisen. Die Verankerung des Verbindungselements kann vielmehr durch die vom Spreizelement auf die Segmente des Verbindungselements ausgeübten Kräfte erfolgen.

Bei einer vorteilhaften Ausgestaltung des Verfahrens ist vorgesehen, daß man ein Verbindungselement mit einem die Aufnahme mit der gegenüberliegenden Endfläche des Verbindungselements verbindenden Durchgangskanal verwendet. Dadurch besteht die Möglichkeit, ein oder mehrere Spreizelemente abhängig von den Gegebenheiten der Montage entweder vom schaftseitigen Ende aus und/oder vom kopfseitigen Ende des Verbindungselements aus in die Aufnahme einzuführen.

Bisher wurde davon ausgegangen, daß man das Spreizelement in die Aufnahme eindrückt. Werden bruchanfällige Fügeteile verwendet, so ist es beim Eindrücken des Spreizelements in die Aufnahme des Verbindungselements erforderlich, daß das Verbindungselement auf der gegenüberliegenden Seite abgestützt wird. Eine derartige Abstützung kann vermieden werden, wenn man das Spreizelement mit Hilfe eines den Durchgangskanal hindurchgreifenden Zugelements in die Aufnahme einzieht. In diesem Fall kann das Spreizelement vor der Montage an einer Endfläche des Verbindungselements positioniert werden, wobei mit Hilfe des Zugelements eine Verbindung mit der gegenüberliegenden Endfläche erzielt wird. Nach der Positionierung des Verbindungselements in den Öffnungen der Fügeteile kann das Spreizelement mit Hilfe des Zugelements in die Aufnahme eingezogen und gleichzeitig kann das Verbindungselement an der Endfläche, aus der das Zugelement hervorsteht, abgestützt werden. Auch bei empfindlichen, bruchanfälligen Fügeteilen ist es somit beim Einbringen des Spreizelements in die Aufnahme nicht erforderlich, das Verbindungselement auf der gegenüberliegenden Seite abzustützen. Dies ermöglicht eine einseitige Montage.

Je weiter das Spreizelement in die Aufnahme eingeführt wird, desto größer ist die vom Spreizelement auf den umgebenden Verbindungsschaft ausgeübte Radialkraft. Um zu vermeiden, daß der Verbindungsschaft überbeansprucht wird, ist bei einer bevorzugten Ausgestaltung des erfindungsgemäßen Verfahrens vorgesehen, daß man ein Zugelement mit einer bei Überschreiten einer maximalen Zugbelastung brechenden Sollbruchstelle verwendet. Wurde die maximale Zugbelastung erreicht, so kann das Spreizelement nicht weiter eingeführt werden, da die Sollbruchstelle des Zugelements aufbricht.

Günstig ist es, ein Zugelement mit einer derart ausgebildeten Sollbruchstelle zu verwenden, daß die maximale Zugbelastung bei Erreichen der gewünschten Endposition des Spreizelements innerhalb der Aufnahme erzielt wird. Dies ermöglicht es, die Zugbelastung auf das Zugelement über die maximale Belastung hinaus zu erhöhen, da dabei das Spreizelement jeweils die gewünschte Endposition innerhalb der Aufnahme erreicht und der Verbindungsschaft entsprechend aufgespreizt wird, anschließend bricht das Zugelement und die Montage ist beendet.

Insbesondere bei großen auftretenden Zugbelastungen ist es günstig, ein als Zugstange ausgebildetes Zugelement zu verwenden.

Bei einer alternativen Ausgestaltung des Verfahrens, das insbesondere dann zum Einsatz kommt, wenn geringere Zugbelastungen zu erzielen sind, ist vorgesehen, daß man ein als Zugdraht oder -seil ausgebildetes Zugelement verwendet.

Günstig ist es, einen Verbindungskopf mit einer als ringförmiger Ausschnitt aus einer Kugeloberfläche ausgestalteten ersten Hinterschneidung zu verwenden. Dies ermöglicht es, das Verbindungselement in einem unterschiedlichen Winkel zum ersten Fügeteil anzuordnen. Dadurch können auf einfache Weise Fertigungstoleranzen des ersten Fügeteils ausgeglichen werden.

Um auch Fertigungstoleranzen des zweiten Fügeteils ausgleichen zu können, ist es von Vorteil, wenn man einen Verbindungsschaft mit einer als ringförmiger Ausschnitt aus einer Kugeloberfläche ausgestalteten zweiten Hinterschneidung verwendet. Dadurch kann das Verbindungselement in einem unterschiedlichen Winkel zum zweiten Fügeteil angeordnet werden.

Bei Verwendung eines Konterelements läßt sich ein Winkelausgleich des Verbindungsschafts bezüglich des zweiten Fügeteils dadurch bewirken, daß man ein Konterelement mit einem als ringförmiger Ausschnitt aus einer Kugeloberfläche ausgestalteten Außenmantel verwendet. Das Konterelement kann in eine korrespondierende Öffnung des zweiten Fügeteils eingeführt werden, deren am Außenmantel des Konterelements anliegende Wand zum Erzielen einer flächenhaften Anlage ebenfalls als ringförmiger Ausschnitt aus einer Kugelfläche ausgestaltet sein kann, so daß das Konterelement in der Öffnung verkippt werden kann, um Winkeltoleranzen auszugleichen, ohne daß dabei die flächenhafte Anlage beeinträchtigt wird.

Das Einbringen einer Öffnung in das zweite Fügeteil kann vermieden werden, indem man eine das Konterelement umhüllende, sich flächenhaft an dessen Außenmantel anlegende Buchse mit dem zweiten Fügeteil verbindet. Die Buchse stellt damit die Öffnung des zweiten Fügeteils dar, in die man das Konterelement einführt, so daß in das zweite Fügeteil selbst keine Öffnung eingearbeitet werden muß.

Vorteilhaft ist es, eine Buchse zu verwenden, die auf das Konterelement eine radial nach innen gerichtete Vorspannung ausübt. Das Konterelement wird dadurch auch ohne eine vom Verbindungselement hervorgerufene Belastung in der Buchse gehalten. Außerdem hat dies zur Folge, daß eine durch den sich aufspreizenden oder aufgrund einer thermischen Belastung sich ausdehnenden Verbindungsschaft hervorgerufene radial nach außen gerichtete Spannung nur eine relativ geringe Spannungsänderung in der Buchse und im Konterelement hervorruft.

Eine Vorspannung kann beispielsweise dadurch erzielt werden, daß man eine in Längsrichtung geschlitzte Buchse verwendet. Diese kann derart dimensioniert werden, daß sie sich in ihrem geschlitzten Bereich beim Einfügen des Konterelements erweitert und anschließend auf das eingeführte Konterelement eine radial nach innen gerichtete Spannung ausübt.

Die Vorspannung kann dadurch verstärkt werden, daß man ein die geschlitzte Buchse in Umfangsrichtung umgebendes Federelement verwendet, das die Buchse mit einer nach innen gerichteten Radialkraft beaufschlagt.

Als Federelement kann beispielsweise ein Federring verwendet werden.

Die Buchse kann mit dem zweiten Fügeteil lösbar verbunden werden.

Beispielsweise kann die Buchse mit dem zweiten Fügeteil verschraubt werden.

Um bei der Montage Lagetoleranzen bezüglich des gegenseitigen Abstands der beiden Fügeteile ausgleichen zu können, ist bei einer bevorzugten Ausgestaltung des erfindungsgemäßen Verfahrens vorgesehen, daß man in der Buchse ein das Konterelement im Abstand zu dem mit der Buchse verbindbaren zweiten Fügeteil haltendes Distanzelement anordnet. Dadurch wird zwischen Konterelement und zweitem Fügeteil ein Freiraum gebildet, in den das Verbindungselement mit seinem schaftseitigen Endbereich eintauchen kann. Dadurch können Toleranzen in Längsrichtung des Verbindungselements, d.h. Toleranzen bezüglich des Abstands der beiden Fügeteile, ausgeglichen werden.

Hierbei ist es besonders günstig, eine Aufweitung mit einem kleinen Konuswinkel zu verwenden, da dadurch Lageverschiebungen des Verbindungsschafts nur sehr geringe Änderungen der auf das Konterelement vom Verbindungsschaft ausgeübten Kräfte zur Folge haben.

Günstig ist es, ein als Distanzring ausgestaltetes Distanzelement zu verwenden, da sich dadurch das Konterelement auf dem Ringbereich des Distanzelements abstützen kann und gleichzeitig durch die Dicke des Rings ein Abstand zwischen Konterring und zweitem Fügeteil erzielt wird.

Soll ein direkter Kontakt des Verbindungsschafts mit dem zweiten Fügeteil vermieden werden, so kann dazu ein als Distanzscheibe ausgebildetes Distanzelement verwendet werden, wobei in deren dem Konterelement zugewandter Oberseite eine Vertiefung eingearbeitet ist und das Konterelement von den Randbereichen der Vertiefung gehalten wird. Die Distanzscheibe bildet somit eine Auflagepfanne für das Konterelement, und der Verbindungsschaft kann soweit durch den Konterring hindurchgreifen, bis er mit dem Pfannenboden, d.h. dem zentralen Bereich der dem Konterelement zugewandten Oberseite der Distanzscheibe, zur Anlage kommt. Ein unmittelbarer Kontakt zwischen Verbindungsschaft und zweitem Fügeteil wird somit durch die dazwischen liegende Distanzscheibe unterbunden, wobei gleichzeitig durch die Halterung des Konterelements an den Randbereichen der Vertiefung ein Freiraum zwischen Konterelement und zentralem Bereich der Vertiefung erzielt wird.

Lagetoleranzen und Winkeltoleranzen der beiden Fügeteile können ausgeglichen werden, indem man die Distanzscheibe und die Buchse derart ausgestaltet, daß die dem Konterelement zugewandte Oberseite der Distanzscheibe und die dem Konterelement zugewandte Innenwand der Buchse eine gemeinsame, einen ringförmigen Ausschnitt einer Kugeloberfläche darstellende Anlagefläche ausbilden für einen als ringförmiger Ausschnitt einer Kugeloberfläche ausgebildeten Außenmantel des Konterelements. Die Innenwand der Buchse und die Oberseite der Distanzscheibe bilden somit gemeinsam eine Anlagefläche für das Konterelement, wobei das Konterelement verschwenkt werden kann, ohne daß dabei der flächenhafte Kontakt zwischen Konterelement und Buchse sowie zwischen Konterelement und Distanzscheibe beeinträchtigt wird. Somit können sowohl Lagetoleranzen zwischen den beiden Fügeteilen mit Hilfe des Zwischenraums zwischen Konterelement und zentralem Bereich der Vertiefung als auch Winkeltoleranzen des zweiten Fügeteils bezüglich dem ersten Fügeteil aufgrund der Verschwenkbarkeit des Konterelements ausgeglichen werden.

Um Druckkräfte zwischen den beiden Fügeteilen übertragen zu können, ist bei einer bevorzugten Ausgestaltung des erfindungsgemäßen Verfahrens vorgesehen, daß man ein eine Druckkraft übertragendes Druckelement zwischen den beiden Fügeteilen positioniert. Mit Hilfe des Druckelements läßt sich eine Druckkraft von einem Fügeteil auf das andere Fügeteil übertragen, ohne daß dabei das Verbindungselement oder das Konterelement in Druckübertragungsrichtung belastet werden.

Werden Verbindungselement und Druckelement erwärmt oder abgekühlt, so kann es zu einer Ausdehnung bzw. zu einem Zusammenziehen der Elemente kommen. Dies kann zur Folge haben, daß der durch das Druckelement definierte Abstand zwischen den beiden Fügeteilen sich so verändert, daß der Sitz des Verbindungsschafts beeinträchtigt wird. Um dies zu vermeiden, ist es von Vorteil, wenn ein Druckelement verwendet wird, dessen Wärmeausdehnungskoeffizient an den Wärmeausdehnungskoeffizienten des Verbindungselements angepaßt ist. Durch die Anpassung der Wärmeausdehnungskoeffizienten werden bei einer Temperaturänderung Spannungen am Verbindungselement gering gehalten, indem eine Längenänderung des Verbindungselements durch eine Längenänderung des Druckelements kompensiert wird.

Eine einfache Positionierung des Druckelements bezüglich des Verbindungselements ergibt sich dadurch, daß man ein den Verbindungsschaft ringförmig umgebendes Druckelement verwendet.

Als Druckelement kann beispielsweise ein Hohlzylinder verwendet werden.

Günstig ist es, das Druckelement auf die mit dem zweiten Fügeteil verbundene Buchse aufzusetzen. Hierbei ergibt sich eine sichere Positionierung, wenn man ein Druckelement verwendet, dessen der Buchse zugewandte Stirnwand eine Vertiefung zur Aufnahme des dem Druckelement zugewandten Endbereichs der Buchse aufweist. Das Druckelement rastet somit auf der Buchse ein und läßt sich anschließend quer zur Buchse nicht mehr verschieben.

Eine Druckkraft läßt sich zwischen den beiden Fügeteilen auch dadurch übertragen, daß man ein Verbindungselement verwendet, dessen Verbindungskopf und Verbindungsschaft jeweils eine weitere, schräg zur Belastungsrichtung verlaufende dritte bzw. vierte Hinterschneidung umfassen, wobei diese Hinterschneidungen einander abgewandt sind. Die einander abgewandten Hinterschneidungen nehmen eine auf ein Fügeteil einwirkende Druckkraft auf und übertragen sie über das Verbindungselement auf das andere Fügeteil.

Hierbei ist es besonders günstig, wenn, wie oben erläutert, Verbindungskopf und Verbindungsschaft spiegelsymmetrisch zueinander ausgebildet sind, wobei die Normale der Spiegelebene kolinear zur Belastungsrichtung verläuft und wobei der am Verbindungskopf angeordnete Längsschlitz quer zu dem am Verbindungsschaft angeordneten Längsschlitz ausgerichtet ist. Aufgrund der spiegelsymmetrischen Ausgestaltung muß bei der Montage nicht auf die Orientierung des Verbindungselements geachtet werden. Da sowohl am Verbindungskopf als auch am Verbindungsschaft jeweils zwei Hinterschneidungen angeordnet sind, wobei die erste Hinterschneidung des Verbindungskopfes der zweiten Hinterschneidung des Verbindungsschafts zugewandt ist, während die dritte Hinterschneidung des Verbindungskopfes einer entsprechenden vierten Hinterschneidung des Verbindungsschafts abgewandt ist, lassen sich neben Scherkräften sowohl Zugkräfte als auch Druckkräfte mit Hilfe des Verbindungselements übertragen.

Wie eingangs erwähnt, ist das erfindungsgemäße Verfahren insbesondere für den Einsatz spröder Materialien geeignet. Für den Einsatz im Hochtemperaturbereich, d.h. bei Temperaturen oberhalb von etwa 1300° C, sind insbesondere keramische Materialien geeignet. Bei einer besonders bevorzugten Ausgestaltung des erfindungsgemäßen Verfahrens ist deshalb vorgesehen, daß man ein aus einem keramischen Material hergestelltes Verbindungselement, Konterelement, Spreizelement, Druckelement und/oder Distanzelement verwendet. Dies ermöglicht den Einsatz der Verbindung selbst bei hohen Temperaturen, zum Beispiel in Temperaturbereich zwischen 1600° C und 1800° C.

Die Verbindungen können beispielsweise bei Thermalschutzsystemen, wie sie im Staupunktsbereich von Hyperschall- oder Wiedereintrittsfluggeräten Verwendung finden, eingesetzt werden.

Aufgrund der Möglichkeit, Toleranzen bezüglich der Stellung der beiden Fügeteile auszugleichen, ist das erfindungsgemäße Verfahren insbesondere dann vorteilhaft anzuwenden, wenn die entsprechenden Fügeteile im Hochtemperaturbereich eingesetzt werden. Aufgrund der hohen Temperaturen kommt es zum einen zu starken Wärmeausdehnungen und damit verbunden zu Winkelveränderungen zwischen den beiden Fügeteilen, zum anderen können starke Temperaturgradienten auftreten, die eine unterschiedliche Wärmeausdehnung und damit ebenfalls Winkelveränderungen zur Folge haben.

Werden keramische Materialien eingesetzt, sind diese zum einen temperatur- und thermoschockbeständig, zum anderen bewirken sie eine thermische Isolation zwischen den beiden Fügeteilen, so daß es beispielsweise bei der Verbindung einer Hitzeschutzkachel als erstem Fügeteil an einer metallischen Unterstruktur als zweitem Fügeteil nur zu einer sehr geringen Wärmeübertragung kommt.

Da mit dem erfindungsgemäßen Verfahren Winkeltoleranzen ausgeglichen werden können, kommt es auch bei hohen Temperaturen und entsprechend großer Wärmeausdehnung nicht zu auf das Verbindungselement einwirkenden Kerbspannungen, wie dies bei herkömmlichen Verfahren der Fall ist. Aufgrund der üblicherweise auftretenden Kerbspannungen und der damit verbundenen Bruchgefahr sind die bekannten Verfahren und Vorrichtungen nur sehr beschränkt im Hochtemperaturbereich verwendbar.

Das erfindungsgemäße Verfahren hat außerdem den Vorteil, daß die mittels des Verfahrens hergestellte Verbindung zwischen den beiden Fügeteilen relativ einfach lösbar ist, indem beispielsweise das in die Aufnahme des Verbindungsschafts eingeführte Spreizelement aus dem Verbindungsschaft herausgedrückt wird, oder indem der Verbindungskopf abgefräst wird. Die Verbindung läßt sich somit lösen, ohne daß die beiden Fügeteile beeinträchtigt werden.

Besonders vorteilhaft ist es, wenn man ein aus einer Faserkeramik hergestelltes Verbindungselement, Konterelement, Spreizelement, Druckelement und/oder Distanzelement verwendet. Faserkeramik ist insbesondere für den Hochtemperatureinsatz geeignet.

Günstig ist es, ein wärmeisolierendes und/oder elektrisch isolierendes Konterelement und/oder Distanzelement zu verwenden. Dadurch kann eine thermische oder auch eine elektrische Isolation der beiden Fügeteile erzielt werden, ohne daß es erforderlich ist, insbesondere das Verbindungselement wärmeisolierend und/oder elektrisch isolierend auszugestalten. Somit ist man bei der Wahl des Materials für das Verbindungselement nicht auf entsprechende isolierende Materialien beschränkt und erzielt trotzdem eine Isolation der Fügeteile.

Vorteilhaft ist es, wenn man eine aus einem elastisch und plastisch verformbaren Werkstoff hergestellte Buchse verwendet. Beispielsweise bei zu großen Temperaturgradienten kann es aufgrund der thermischen Ausdehnung der Fügeteile zu einer so großen Winkeländerung kommen, daß diese durch das Verbindungselement nicht mehr ausgeglichen werden kann. Dies hat zur Folge, daß es zu einer zunehmenden Belastung und schließlich zu einer Überlastung des Verbindungselements kommt. Die zunehmende Belastung hat zunächst eine elastische Verformung des Verbindungselements zur Folge, bei zu großen Verformungen können allerdings die zulässigen Kräfte auf das Verbindungselement und auf die Fügeteile überschritten werden. Um dies zu vermeiden, wird die Verformungsmöglichkeit der aus einem elastisch und plastisch verformbaren Werkstoff hergestellten Buchse ausgenützt.

Beispielsweise kann eine aus einem metallischen Werkstoff hergestellte Buchse verwendet werden.

Die Buchse kann dabei so dimensioniert sein, daß sie sich, bevor die maximal zulässige Spannung in den keramischen Teilen erreicht wird, plastisch verformt. Die Buchse wirkt somit als Überlastungsschutz, so daß eine Zerstörung des Verbindungselements oder der Fügeteile vermieden wird.

Wie oben erläutert, kann das Spreizelement dadurch in die Aufnahme des Verbindungsschafts eingeführt werden, daß es mit Hilfe eines Zugelements eingezogen wird. Aufgrund von Fertigungstoleranzen kann das Spreizelement bei der Montage zu weit oder zu wenig in den Verbindungsschaft eingezogen werden, bevor die Sollbruchstelle des Zugelements bricht. Dadurch kann es zu einer falschen Positionierung des Spreizelements kommen. Um dies zu vermeiden, ist bei einer vorteilhaften Ausgestaltung des erfindungsgemäßen Verfahrens vorgesehen, daß man ein mit dem Zugelement in Eingriff bringbares, eine kontrollierte Zugkraft auf das Zugelement ausübendes Montagewerkzeug verwendet.

Die Lage des Spreizelements kann dadurch kontrolliert werden, daß man ein Montagewerkzeug verwendet, das eine die Lage des Spreizelements innerhalb der Aufnahme und/oder die auf das Zugelement ausgeübte Zugkraft feststellende Meßeinrichtung umfaßt. Die Meßeinrichtung kann beispielsweise die vom Spreizelement beim Einziehen in die Aufnahme zurückgelegte Wegstrecke und die dafür aufgewendete Zugkraft feststellen. Somit kann kontrolliert werden, ob das Spreizelement die gewünschte Lage eingenommen hat und mit der erwünschten Kraft gegen die Aufnahme drückt.

Insbesondere bei spröden Fügeteilen soll eine Beanspruchung der Fügeteile während der Montage des Verbindungselements vermieden werden. Bei einer vorteilhaften Ausgestaltung des Verfahrens ist deshalb vorgesehen, daß man ein auf dem Verbindungskopf abstützbares Montagewerkzeug zum Ausüben der Zugkraft auf das Zugelement verwendet. Bei einer derartigen Ausgestaltung wird die zum Einziehen des Spreizelements erforderliche Gegenkraft auf den Verbindungskopf gerichtet, so daß die Fügeteile nicht belastet werden.

Der Erfindung liegt auch die Aufgabe zugrunde, eine Vorrichtung zur Durchführung des Verfahrens mit einem Verbindungselement, das einen Verbindungskopf mit einer schräg zur Kraftübertragungsrichtung verlaufenden ersten Hinterschneidung sowie einen vom Verbindungskopf ausgehenden Verbindungsschaft aufweist, derart auszugestalten, daß die Vorrichtung auch für den Einsatz spröder Materialien geeignet ist.

Diese Aufgabe wird bei einer Vorrichtung der eingangs beschriebenen Art erfindungsgemäß dadurch gelöst, daß der Verbindungsschaft so ausgebildet ist, daß er vor Einführen des Spreizelements in die Aufnahme des Verbindungselements mit der zweiten Hinterschneidung flächig an einer mit dem zweiten Fügeteil in Wirkverbindung stehenden zweiten Anlagefläche anlegbar ist.

Bevorzugte Ausgestaltungen der erfindungsgemäßen Vorrichtung sind Gegenstand der Ansprüche 63 bis 107, deren Vorteile bereits im Zusammenhang mit der Erläuterung der bevorzugten Ausgestaltungen des erfindungsgemäßen Verfahrens gemäß den Ansprüchen 2 bis 61 erläutert wurden.

Die nachfolgende Beschreibung bevorzugter Ausführungsformen der Erfindung dient im Zusammenhang mit der Zeichnung der näheren Erläuterung.

Es zeigen:
- Figur 1:: eine Teilschnittdarstellung einer ersten Ausführungsform der erfindungsgemäßen Vorrichtung;
- Figur 2:: eine Teilschnittdarstellung einer zweiten Ausführungsform der erfindungsgemäßen Vorrichtung;
- Figur 3:: eine Unteransicht eines bei der in Figur 2 dargestellten Ausführungsform zum Einsatz kommenden Verbindungselements;
- Figur 4:: eine Teilschnittdarstellung einer dritten Ausführungsform vor deren Montage;
- Figur 5:: eine Teilschnittdarstellung der in Figur 3 dargestellten Ausführungsform nach deren Montage;
- Figur 6:: eine Teilschnittdarstellung einer alternativen Ausgestaltung der in der dritten Ausführungsform zum Einsatz kommenden und in den Figuren 4 und 5 dargestellten Metallbuchse;
- Figur 7:: eine zweite alternative Ausgestaltung der in der dritten Ausführungsform zum Einsatz kommenden und in den Figuren 4 und 5 dargestellten Metallbuchse;
- Figur 8:: eine dritte alternative Ausgestaltung der in der dritten Ausführungsform zum Einsatz kommenden und in den Figuren 4 und 5 dargestellten Metallbuchse;
- Figur 9:: eine Teilschnittdarstellung einer vierten Ausführungsform der erfindungsgemäßen Vorrichtung;
- Figur 10:: eine Teilschnittdarstellung einer fünften Ausführungsform der erfindungsgemäßen Vorrichtung;
- Figur 11:: eine Teilschnittdarstellung einer sechsten Ausführungsform der erfindungsgemäßen Vorrichtung und
- Figur 12:: eine schematische Darstellung eines Montagewerkzeugs.

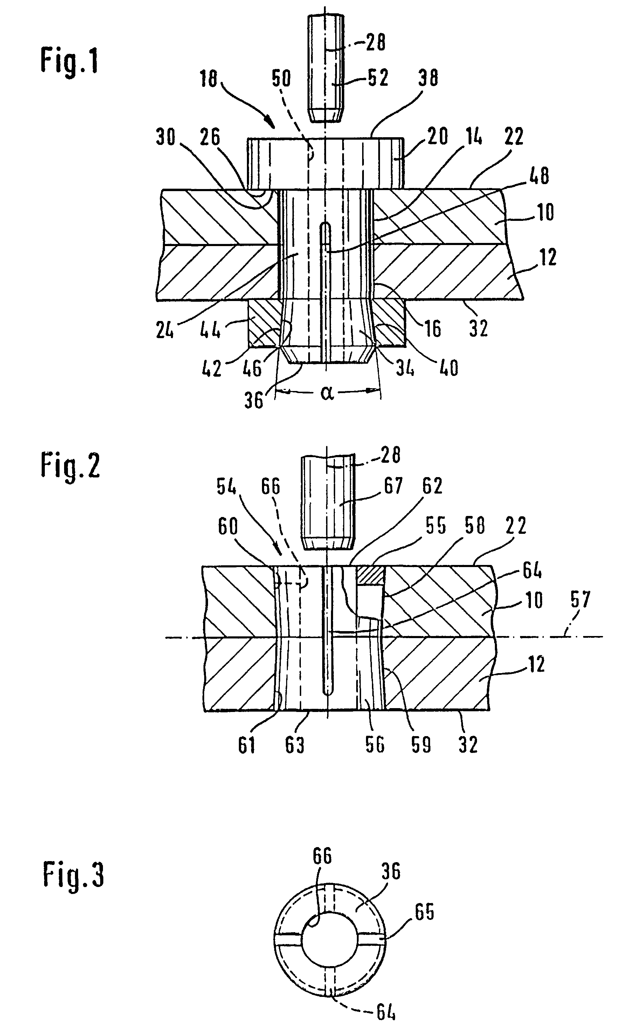

In Figur 1 sind ein plattenförmiges erstes Fügeteil 10 und ein plattenförmiges zweites Fügeteil 12 dargestellt, die aneinander anliegen und die jeweils eine Öffnung in Form einer ersten Durchgangsbohrung 14 und einer zweiten Durchgangsbohrung 16 aufweisen. Die beiden Durchgangsbohrungen 14, 16 sind aufeinander ausgerichtet und weisen jeweils denselben Durchmesser auf. Ein bolzenförmiges Verbindungselement 18 durchgreift die Durchgangsbohrungen 14 und 16 und liegt mit einem zylinderförmigen Verbindungskopf 20 an einer dem zweiten Fügeteil 12 abgewandten Oberseite 22 des ersten Fügeteils 10 an. In Richtung auf das zweite Fügeteil 12 schließt sich an den Verbindungskopf 20 ein zylinderförmiger Verbindungsschaft 24 mit kleinerem Außendurchmesser an. Verbindungskopf 20 und Verbindungsschaft 24 sind einstückig ausgestaltet. Im Übergangsbereich zwischen Verbindungskopf 20 und Verbindungsschaft 24 ist ein Rücksprung 26 angeordnet, der bezüglich einer Symmetrieachse 28 des Verbindungskopfes 20 und des Verbindungsschafts 24 eine quer zur Symmetrieachse 28 angeordnete erste Hinterschneidung 30 bildet. Der Verbindungsschaft 24 steht aus einer dem ersten Fügeteil 10 abgewandten Unterseite 32 des zweiten Fügeteils 12 hervor und weist in dem hervorstehenden Bereich eine Aufweitung 34 auf. Den schaftseitigen Abschluß des Verbindungselements 18 bildet eine quer zur Symmetrieachse 28 angeordnete schaftseitige Endfläche 36, die parallel angeordnet ist zu einer am gegenüberliegenden Ende des Verbindungselements 18 angeordneten kopfseitigen Endfläche 38.

Die Aufweitung 34 ist kegelstumpfförmig ausgestaltet mit einem Kegelwinkel α und einer einen ringförmigen Ausschnitt aus einer Kegelmantelfläche darstellenden Mantelfläche 40.

Die Aufweitung 34 bildet somit einen Konus, wobei der Konuswinkel dem Kegelwinkel α entspricht. Bezüglich der Symmetrieachse 28 bildet die Mantelfläche 40 eine zweite Hinterschneidung 42, die der ersten Hinterschneidung 30 zugewandt ist.

Die Aufweitung 34 ist von einem hülsenförmigen Konterring 44 umgeben, der mit einem Innenmantel 46 flächig an der Mantelfläche 40 der Aufweitung 34 anliegt. Der Konterring 44 bildet somit mit der Aufweitung 34 einen Formschluß.

In die schaftseitige Endfläche 36 mündet ein Längsschlitz 48, der diametral durch den Verbindungsschaft 24 hindurch verläuft und sich in Längsrichtung bis in Höhe des ersten Fügeteils erstreckt.

Die beiden Endflächen 36 und 38 sind über eine mittig angeordnete Zentralbohrung 50 miteinander verbunden. Die Zentralbohrung 50 verläuft somit in Längsrichtung durch das Verbindungselement 18 hindurch. In die Zentralbohrung 50 ist ein zapfenförmiges Spreizelement 52 einführbar. Das Spreizelement 52 kann zylinderförmig oder auch konisch ausgestaltet sein.

Zur Montage wird das Verbindungselement 18 durch die beiden Durchgangsbohrungen 14 und 16 der beiden Fügeteile 10 und 12 hindurchgeführt, wobei es am schaftseitigen Ende zusammengedrückt wird. Dieses weist eine elastische Verformbarkeit aufgrund des Längsschlitzes 48 auf. Im zusammengedrückten Zustand wird der Verbindungsschaft 24 mit seiner Aufweitung 34 in den Konterring 44 eingeführt. Dieser kann vor der Montage des Verbindungselements 18 beispielsweise mit Hilfe eines Klebstoffes an der Unterseite 32 des zweiten Fügeteils 12 festgelegt sein. Es ist allerdings auch möglich, den Konterring 44 nach dem Einführen des Verbindungselements 18 in die beiden Durchgangsbohrungen 14 und 16 über die Aufweitung 34 des Verbindungsschafts 24 zu stülpen. Sobald der Verbindungsschaft 24 nicht mehr in radiale Richtung zusammengedrückt wird, spreizt er sich aufgrund des Längsschlitzes 48 elastisch wieder auf und drückt dabei mit der Mantelfläche 40 der Aufweitung 34 gegen den Innenmantel 46 des Konterrings. Aufgrund der konischen Ausgestaltung der Mantelfläche 40 wird dadurch eine Zugkraft von der als zweite Hinterschneidung 48 wirkenden Mantelfläche 40 in Richtung auf die erste Hinterschneidung 30 ausgeübt, und damit werden die beiden Fügeteile 10 und 12 zusammengedrückt. Nach der Positionierung des Konterrings 44 auf der Aufweitung 34 wird das Spreizelement 52 in die Zentralbohrung 50 eingeführt. Dies hat zur Folge, daß sich der Verbindungsschaft 26 im Bereich des Längsschlitzes 48 und damit insbesondere im Bereich der Aufweitung 34 zusätzlich aufspreizt. Um dies zu erreichen, hat das Spreizelement 52 im wesentlichen den gleichen Durchmesser wie die Zentralbohrung 50. Mit Hilfe des Spreizelements 50 wird die Aufweitung 34 dauerhaft gegen den Konterring 44 gedrückt und damit eine feste Verbindung zwischen den beiden Fügeteilen 10 und 12 erzielt.

Eine zweite Ausführungsform der erfindungsgemäßen Vorrichtung ist in den Figuren 2 und 3 dargestellt, wobei identische Bauteile mit denselben Bezugszeichen bezeichnet sind wie in Figur 1. In Figur 2 ist ein Verbindungselement 54 dargestellt, das einen Verbindungskopf 55 und einen Verbindungsschaft 56 aufweist. Hierbei ergibt sich der Verbindungsschaft 56 durch Spiegelung des Verbindungskopfes 55 an einer Spiegelebene 57, deren Oberflächennormale kolinear zur Symmetrieachse 28 und damit kolinear zur Belastungsrichtung des Verbindungselements verläuft. Verbindungskopf 55 und Verbindungsschaft 56 sind jeweils kegelstumpfförmig ausgestaltet und weisen eine Mantelfläche 58 bzw. 59 auf. Verbindungskopf 55 und Verbindungsschaft 56 bilden somit jeweils einen Konus und liegen mit ihren Mantelflächen 58 und 59 flächenhaft an entsprechend konisch geformten Durchgangsbohrungen 60 und 61 der beiden Fügeteile 10 bzw. 12 an. Im Gegensatz zum ersten Ausführungsbeispiel stehen bei der zweiten Ausführungsform Verbindungskopf 55 und Verbindungsschaft 56 nicht aus der Oberseite 22 des ersten Fügeteils bzw. der Unterseite 32 des zweiten Fügeteils hervor, sondern schließen mit diesen Seiten ab. Sowohl in eine kopfseitige Endfläche 62 als auch in eine schaftseitige Endfläche 63 des Verbindungselements 54 mündet jeweils ein den Verbindungskopf 55 bzw. den Verbindungsschaft 56 diametral durchgreifender Längsschlitz 64 bzw. 65. Die beiden Längsschlitze 64, 65 verlaufen jeweils in Richtung der Symmetrieachse 28, wobei der in die kopfseitige Endfläche 62 einmündende Längsschlitz 64 quer zu dem in die schaftseitige Endfläche 63 einmündenden Längsschlitz 65 angeordnet ist.

Die beiden Endflächen 62 und 63 sind durch eine durchgängige Zentralbohrung 66 miteinander verbunden, in die ein Spreizelement 67 eingeführt werden kann.

Zum Herstellen der Verbindung wird das Verbindungselement 54 in radiale Richtung zusammengedrückt und in die konischen Durchgangsbohrungen 60 und 61 der beiden Fügeteile 10 und 12 eingeführt. Aufgrund der durch die beiden Längsschlitze 64 und 65 erzeugten elastischen Verformbarkeit legen sich der Verbindungskopf 55 und der Verbindungsschaft 56 mit ihren Mantelflächen 58 bzw. 59 flächenhaft an die Wände der Durchgangsbohrungen 60 bzw. 61 an. Anschließend wird das Spreizelement 67 in die Zentralbohrung 66 eingeführt und damit das Verbindungselement zusätzlich aufgespreizt.

Um die elastische Verformbarkeit des Verbindungselements 54 zu erhöhen und damit das Einführen in die Durchgangsbohrungen 60 und 61 zu erleichtern, können der Verbindungskopf 55 und der Verbindungsschaft 56 auch mehrere, beispielsweise jeweils zwei, einander mittig überkreuzende Längsschlitze aufweisen.

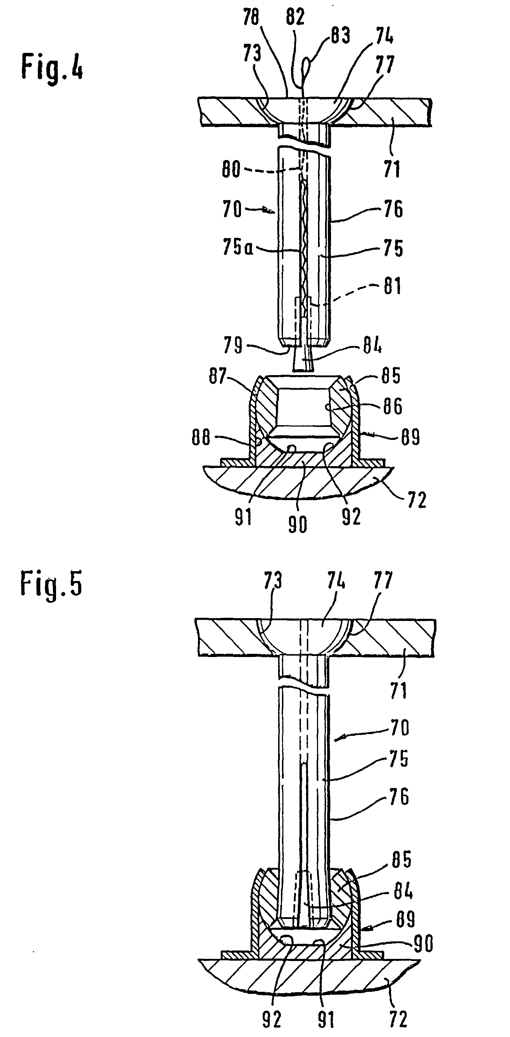

In den Figuren 4 und 5 ist eine dritte Ausführungsform der erfindungsgemäßen Vorrichtung dargestellt, wobei mit Hilfe eines Verbindungselements in Form eines Ankers 70 ein erstes Fügeteil in Form einer Hitzeschutzkachel 71 an einem zweiten Fügeteil in Form einer metallischen Unterstruktur 72 befestigt ist. Der Anker 70 umfaßt einen in eine Durchgangsöffnung 73 der Hitzeschutzkachel 71 eingeführten Ankerkopf 74 und einen sich daran in Richtung auf die metallische Unterstruktur 72 anschließenden Ankerschaft 75. Der Ankerschaft 75 ist kegelstumpfförmig ausgestaltet mit einer sich konisch erweiternden Mantelfläche 76. Ausgehend vom Ankerschaft 75 erweitert sich der Ankerkopf 74 und bildet dabei eine erste Hinterschneidung 77, die als ringförmiger Ausschnitt aus einer Kugeloberfläche ausgestaltet ist. Den Abschluß des Ankerkopfes 74 bildet eine quer zur Längsachse des Ankerschafts angeordnete, ebene kopfseitige Endfläche 78. Parallel zur kopfseitigen Endfläche 78 ist am gegenüberliegenden Ende des Ankers 70 eine schaftseitige Endfläche 79 angeordnet. Die beiden Endflächen 78 und 79 sind über eine stufig ausgestaltete Zentralbohrung 80 miteinander verbunden, die sich in Höhe des schaftseitigen Endbereichs des Ankers 70 sprunghaft erweitert und eine in die schaftseitige Endfläche 79 einmündende Erweiterung 81 ausbildet. Durch die Zentralbohrung 80 hindurch verläuft ein Zugdraht 82, der aus der kopfseitigen Endfläche hervorsteht und mit seinem hervorstehenden Bereich eine Zuglasche 83 bildet. Das der Zuglasche 83 gegenüberliegende Ende des Zugdrahts 82 ist mit einem in die Erweiterung 81 einziehbaren Spreizelement in Form eines Spreizkonus 84 verbunden.

Wie bereits bei den voranstehend beschriebenen Ausführungsformen ist auch bei der in den Figuren 4 und 5 dargestellten dritten Ausführungsform das Verbindungselement geschlitzt, dazu weist der Ankerschaft 75 einen Längsschlitz 75a auf, der in die schaftseitige Endfläche 79 einmündet, den Ankerschaft 75 diametral durchsetzt und sich in Längsrichtung bis in Höhe des an den Ankerkopf 74 angrenzenden Endbereich des Ankerschafts 75 erstreckt.

Der schaftseitige Endbereich des Ankers 70 läßt sich, solange der Spreizkonus 84 noch nicht in die Erweiterung 81 eingezogen ist, durch einen Konterring 85 hindurchführen, dessen der Mantelfläche 76 des Ankers 70 zugewandte Innenseite 86 ebenfalls konisch ausgeformt ist, so daß der Konterring 85 nach dem Einführen des Ankers 70 am schaftseitigen Endbereich der Mantelfläche 76 flächenhaft anliegt und somit formschlüssig mit dem Anker 70 verbunden ist. Die der Innenseite 86 gegenüberliegende Außenseite 87 des Konterrings 85 ist als ringförmiger Ausschnitt aus einer Kugeloberfläche ausgestaltet und liegt flächenhaft an einer entsprechend als ringförmiger Ausschnitt aus einer Kugeloberfläche ausgebildeten Innenwand 88 einer mit der metallischen Unterstruktur 72 verbundenen Metallbuchse 89 an. Die Metallbuchse 89 ist mittels einer in der Zeichnung nicht dargestellten Schraubverbindung lösbar mit der metallischen Unterstruktur 72 verbunden. Innerhalb der Metallbuchse 89 ist zwischen dem Konterring 85 und der metallischen Unterstruktur 72 eine Distanzscheibe 90 angeordnet. In eine dem Konterring 85 zugewandte Oberseite 91 der Distanzscheibe ist eine Vertiefung 92 eingearbeitet, die in ihrem radial außenliegenden Bereich eine Anlagefläche für die Außenseite 87 des Konterrings 85 bildet, wobei die Anlagefläche als ringförmiger Ausschnitt aus einer Kugeloberfläche ausgebildet ist. Die Oberseite 91 der Distanzscheibe 90 schließt sich mit ihrer Vertiefung 92 kontinuierlich an die Innenwand 88 der Metallbuchse 89 an, so daß der Konterring 85, der im radial außenliegenden Bereich der Vertiefung 92 an der Oberseite der Distanzscheibe 90 anliegt und somit im Abstand zur metallischen Unterstruktur 72 gehalten ist, in der Metallbuchse 89 verschwenkt werden kann, ohne daß dabei die flächenhafte Anlage der Außenseite 87 an der Innenwand 88 der Metallbuchse 89 sowie an dem radial außenliegenden Bereich der Vertiefung 92 beeinträchtigt wird.

In Figur 5 ist das dritte Ausführungsbeispiel dargestellt, nachdem der schaftseitige Endbereich des Ankers 70 in den Konterring 85 eingeführt und anschließend der Spreizkonus 84 mit Hilfe des Zugdrahts 82 in die Erweiterung 81 eingezogen wurde. Aufgrund der durch den Längsschlitz 75a erzeugten elastischen Verformbarkeit des Ankerschafts 75 sowie aufgrund der Spreizwirkung des Spreizkonus 84 wird der Ankerschaft 75 radial nach außen gedrückt, so daß seine Mantelfläche 76 an der Innenseite 86 des Konterrings 85 flächenhaft anliegt. Der in den Figuren 4 und 5 dargestellte Konterring 85 ist in mehrere, in der Zeichnung nicht dargestellte Segmente unterteilt, die sich jeweils über einen begrenzten Umfangsbereich erstrecken. Die vom aufgespreizten Ankerschaft 75 ausgehende Radialkraft kann dadurch in radiale Richtung an die den Konterring 85 umgebende Metallbuchse 89 weitergegeben werden, ohne daß im Konterring 85 Radialspannungen auftreten. Da der Konterring 85 nur im radial außenliegenden Bereich der Oberseite 91 auf der Distanzscheibe 90 aufliegt, ist der in den Konterring 85 eingeführte Anker 70 mit seiner schaftseitigen Endfläche 79 im Abstand zur Oberseite 91 der Distanzscheibe 90 gehalten. Variationen des Abstands zwischen der Hitzeschutzkachel 71 und der metallischen Unterstruktur 72, wie sie beispielsweise aufgrund von Fertigungstoleranzen auftreten, können somit dadurch ausgeglichen werden, daß der Ankerschaft 75 mehr oder weniger tief in den Zwischenraum zwischen Konterring 85 und zentralem Bereich der Oberseite 91 der Distanzscheibe 90 eintaucht.

Variationen hinsichtlich der Orientierung der Hitzeschutzkachel 71 relativ zur metallischen Unterstruktur 72, wie sie beispielsweise bei Temperaturerhöhungen aufgrund unterschiedlicher Wärmeausdehnung hervorgerufen werden können, dadurch ausgeglichen werden, daß sich der Ankerschaft 75 und der ihn umgebende Konterring 85 innerhalb der Metallbuchse 89 verschwenken. Ein winkelmäßiger Ausgleich wird außerdem auch dadurch erzielt, daß die erste Hinterschneidung 77 des Ankerkopfes 74 als ringförmiger Ausschnitt aus einer Kugeloberfläche ausgebildet ist und sich somit ebenfalls innerhalb der Durchgangsöffnung 73 der Hitzeschutzkachel 71 verschwenken kann, ohne daß dabei die flächenhafte Anlage beeinträchtigt wird.

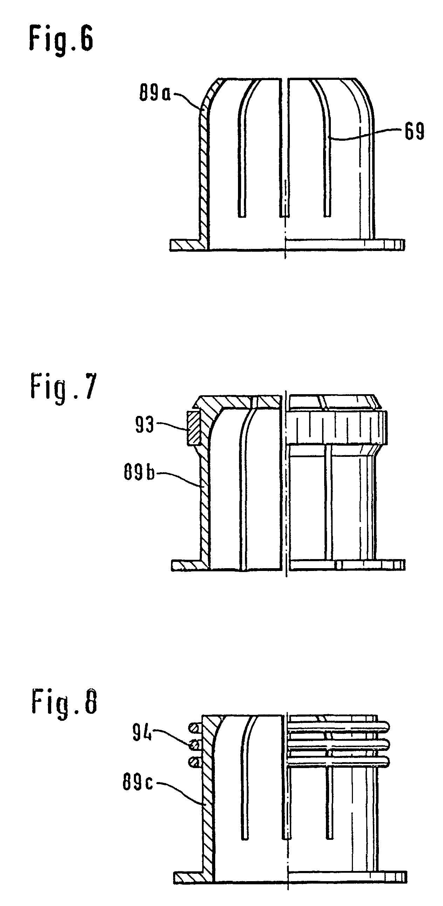

In den Figuren 6, 7 und 8 sind alternative Ausgestaltungen der in den Figuren 4 und 5 dargestellten Metallbuchse 89 dargestellt. Die in der Figur 6 dargestellte Metallbuchse 89a umfaßt in Längsrichtung angeordnete Längsschlitze 69, so daß die Metallbuchse 89a in radialer Richtung elastisch verformbar ist. Sie kann dadurch derart dimensioniert werden, daß der in den Figuren 4 und 5 dargestellte Konterring 85 die Metallbuchse 89a in radialer Richtung aufweitet, wenn er in der Metallbuchse 89a positioniert wird. Aufgrund der elastischen Verformbarkeit bewirkt die Metallbuchse 89a anschließend eine radial nach innen auf den Konterring 85 einwirkende Vorspannung. Diese wirkt auf den Konterring 85 bereits dann, wenn der Ankerschaft 75 noch nicht in den Konterring 85 eingeführt wurde. Aufgrund der Vorspannung wird der Konterring 85 in der Metallbuchse 89a gehalten, und zusätzlich bewirkt die Vorspannung, daß eine Radialkraft, die beispielsweise durch den sich aufspreizenden Ankerschaft 75 hervorgerufen werden kann, nur eine relativ geringe Spannungsanderung in der Metallbuchse 89a und im Konterring 85 hervorruft.

In Figur 7 ist eine Metallbuchse 89b dargestellt, die zur Erhöhung der auf den Konterring 85 einwirkenden Vorspannung in ihrem oberen Endbereich, d.h. in dem dem Ankerschaft 75 zugewandten Endbereich, von einem Federring 93 umgeben ist. Durch den Federring 93 wird der obere Endbereich der Metallbuchse 89b elastisch mit einer nach innen wirkenden Radialkraft beaufschlagt, durch die eine besonders hohe Vorspannung erzielt werden kann, wenn der Konterring 85 in der Metallbuchse 89b positioniert wird.

In Figur 8 ist eine Metallbuchse 89c dargestellt, die in ihrem oberen, d.h. dem Ankerschaft 75 des in den Figuren 4 und 5 dargestellten Ankers zugewandten Endbereich von drei elastischen Ringen 94 umgeben ist. Hierbei kann es sich beispielsweise um Ringe handeln, die aus einem Werkstoff mit besonders hoher Elastizität hergestellt sind, oder um nicht geschlossene Metallringe, d.h. um Metallringe, die in einem begrenzten Umfangsbereich unterbrochen sind. Die Ringe 94 bewirken eine elastische Federkraft auf den oberen Endbereich der Metallbuchse 89c, so daß diese im Konterring 85 eine große Vorspannung hervorruft, sofern der Konterring in der Metallbuchse 89c positioniert wird. Wie schon bei den in den Figuren 6 und 7 dargestellten Ausgestaltungen der Metallbuchse, wird der Konterring 85 auch in der Metallbuchse 89c aufgrund der herrschenden Vorspannung gehalten, auch wenn der Ankerschaft 75 noch nicht in den Konterring 85 eingeführt wurde. Aufgrund der herrschenden Vorspannung bewirkt eine Ausdehnung des Ankerschafts 75, nachdem er in den in der Metallbuchse 89c positionierten Konterring 85 eingeführt wurde, nur eine relativ geringe Spannungsänderung.

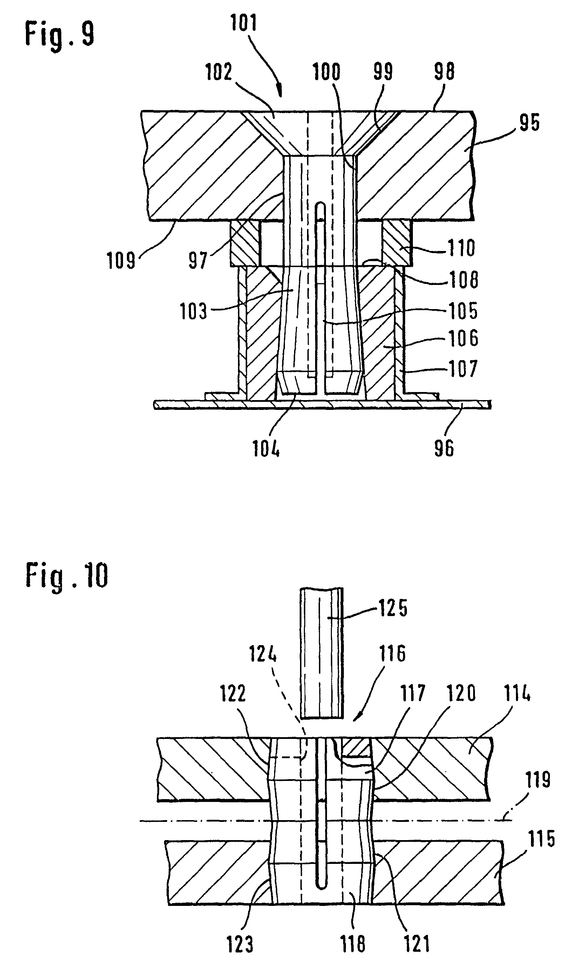

Eine weitere vorteilhafte Ausführungsform der erfindungsgemäßen Vorrichtung ist in Figur 9 dargestellt. Diese eignet sich insbesondere zur Übertragung von Druckbelastungen zwischen einem ersten Fügeteil 95 und einem zweiten Fügeteil 96. In das erste Fügeteil 95 ist eine Durchgangsöffnung 97 eingearbeitet, die ausgehend von einer dem zweiten Fügeteil 96 abgewandten Oberseite 98 des ersten Fügeteils 95 einen konisch sich verjüngenden Eingangsabschnitt 99 und einen sich daran anschließenden zylinderförmigen Ausgangsabschnitt 100 umfaßt. Die Durchgangsöffnung 97 wird von einem Verbindungselement 101 durchgriffen, das mit einem kegelstumpfförmigen Verbindungskopf 102 am Eingangsabschnitt 99 flächenhaft anliegt. An den Verbindungskopf 102 schließt sich in Richtung auf das zweite Fügeteil 96 ein konisch sich erweiternder Verbindungsschaft 103 an, der mit einer schaftseitigen Endfläche 104 abschließt. In die schaftseitige Endfläche 104 mündet ein den Verbindungsschaft 103 diametral durchsetzender Längsschlitz 105. Der schaftseitige Endbereich des Verbindungsschafts 103 ist von einer sich flächenhaft an die Außenseite des Verbindungsschafts 103 anlegenden Konterhülse 106 umgeben, die ihrerseits in einer mit dem zweiten Fügeteil 96 verbundenen Metallhülse 107 angeordnet ist. Zwischen einer dem ersten Fügeteil 95 zugewandten Oberseite 108 der Metallhülse und einer dem zweiten Fügeteil 96 zugewandten Unterseite 109 des ersten Fügeteils 95 ist eine Druckhülse 110 angeordnet, die auf der Oberseite 108 der Metallhülse 107 aufliegt, und mit ihrer gegenüberliegenden Stirnfläche an der Unterseite 109 des ersten Fügeteils flächig anliegt.

Druckkräfte zwischen den beiden Fügeteilen 95 und 96 lassen sich über die Metallhülse 107 und die Druckhülse 110 übertragen. Um zu vermeiden, daß sich bei einer thermischen Belastung der Fügeteile 95, 96 und des Verbindungselements 101 der Verbindungsschaft 103 in Längsrichtung so weit ausdehnt, daß er mit seiner schaftseitigen Endfläche 104 am zweiten Fügeteil 96 zur Anlage kommt und somit eine Kraft in Richtung auf das erste Fügeteil 95 erfährt, wird für die Druckhülse 110 ein Material verwendet, dessen Wärmeausdehnungskoeffizient an den Wärmeausdehnungskoeffizienten des Verbindungsschafts angepaßt ist, so daß sich Druckhülse 110 und Verbindungsschaft 103 so ausdehnen und zusammenziehen, daß bei einer thermischen Belastung keine inneren Spannungen auftreten.

Ein weiteres Ausführungsbeispiel der erfindungsgemäßen Vorrichtung, das zur Übertragung einer Druckbelastung zwischen einem ersten Fügeteil 114 und einem zweiten Fügeteil 115 ausgebildet ist, ist in Figur 10 dargestellt. Hierbei kommt ein Verbindungselement 116 zum Einsatz, bei dem entsprechend wie bei dem in Figur 2 dargestellten Ausführungsbeispiel ein Verbindungskopf 117 spiegelbildlich zu einem Verbindungsschaft 118 ausgebildet ist, wobei eine Spiegelebene 119 mit parallel zur Längsrichtung des Verbindungselements 116 angeordneter Oberflächennormale ausgerichtet ist. Verbindungskopf 117 und Verbindungsschaft 118 weisen jeweils zwei Hinterschneidungen auf, wobei eine erste Hinterschneidung 120 am Verbindungskopf 117 auf eine am Verbindungsschaft 118 angeordnete zweite Hinterschneidung 121 weist, während eine am Verbindungskopf 117 angeordnete dritte Hinterschneidung 122 einer am Verbindungsschaft 118 angeordneten vierten Hinterschneidung 123 abgewandt ist. Das Verbindungselement 116 ist entsprechend den voranstehend beschriebenen Verbindungselementen in Längsrichtung geschlitzt und weist dadurch in radialer Richtung eine elastische Verformbarkeit auf. Zusätzlich läßt sich in eine das Verbindungselement 116 in Längsrichtung durchsetzende Zentralbohrung 124 ein Spreizelement 125 einführen, wodurch die Aufspreizung des Verbindungselements 116 verstärkt wird.

Mit Hilfe der ersten und der zweiten Hinterschneidung 120 bzw. 121 läßt sich zwischen den beiden Fügeteilen 114 und 115 eine Zugbelastung übertragen, wie dies bereits bei den voranstehend beschriebenen Ausführungsformen der Fall ist. Zusätzlich läßt sich aufgrund der dritten Hinterschneidung 122 und der vierten Hinterschneidung 123, die einander abgewandt sind, zwischen den beiden Fügeteilen 114 und 115 auch eine Druckbelastung übertragen, ohne daß dazu ein zusätzliches Druckelement, wie z.B. die in Figur 6 dargestellte Druckhülse 110, zum Einsatz.kommen muß.

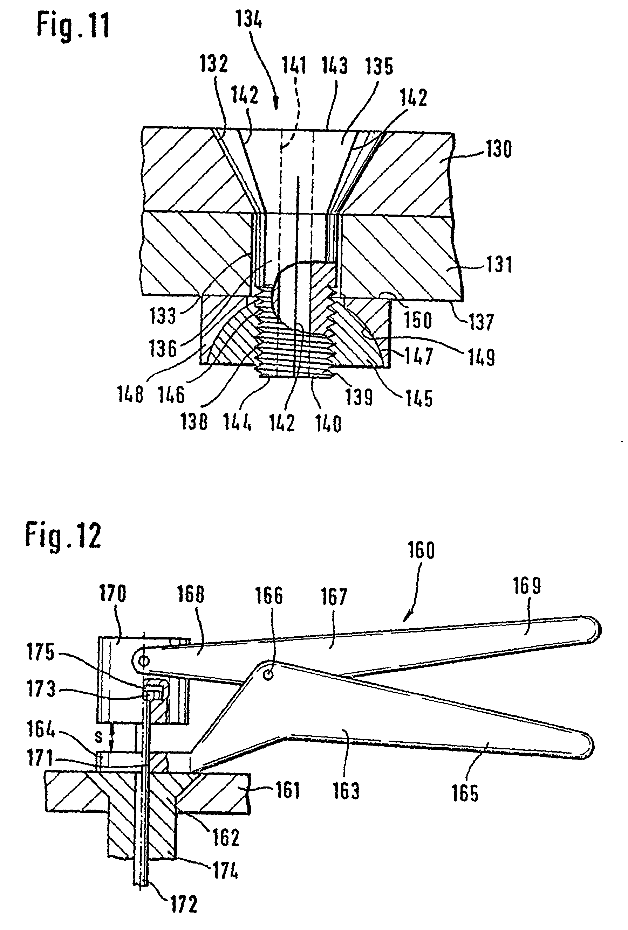

Eine weitere alternative Ausgestaltung der erfindungsgemäßen Vorrichtung ist in Figur 11 dargestellt. Hierbei sind in ein erstes Fügeteil 130 und ein zweites Fügeteil 131 Durchgangsbohrungen 132 bzw. 133 eingearbeitet, die von einem Verbindungselement 134 durchsetzt werden. Während sich die Durchgangsbohrung 132 des ersten Fügeteils 130 in Richtung auf das zweite Fügeteil 131 konisch verjüngt, ist die Durchgangsbohrung 133 des zweiten Fügeteils 131 zylinderförmig ausgeführt. Das Verbindungselement 134 umfaßt einen kegelstumpfförmig ausgebildeten Verbindungskopf 135, der an der Wand der Durchgangsbohrung 132 des ersten Fügeteils 130 flächenhaft anliegt, sowie einen sich daran anschließenden, zylinderförmigen Verbindungsschaft 136, der aus einer dem ersten Fügeteil 130 abgewandten Unterseite 137 des zweiten Fügeteils 131 hervorsteht. In seinem aus der Unterseite 137 hervorstehenden Bereich ist am Außenmantel des Verbindungsschafts 136 eine diesen spiralförmig umgebende Aufweitung 138 angeordnet, die eine dem ersten Fügeteil 130 zugewandte erste Hinterschneidung 139 und eine dem ersten Fügeteil 130 abgewandte zweite Hinterschneidung 140 umfaßt. Entsprechend der Aufweitung 138 umgeben auch die erste und zweite Hinterschneidung 139 bzw. 140 den Verbindungsschaft 136 spiralförmig. Der Verbindungsschaft 136 ist somit mit einer Art Außengewinde ausgestaltet, das durch die Aufweitung 138 gebildet wird.

In eine das Verbindungselement 134 in Längsrichtung durchsetzende Zentralbohrung 141 läßt sich ein in der Zeichnung nicht dargestelltes Spreizelement einführen. Das Verbindungselement 134 weist außerdem vier in der Zeichnung nur schematisch dargestellte, einander quer zur Längsrichtung des Verbindungselements 134 mittig überkreuzende Längsschlitze 142 auf, wobei zwei Längsschlitze in eine kopfseitige Endfläche 143 einmünden und zwei weitere Längsschlitze in eine schaftseitige Endfläche 144.

Der aus der Unterseite 134 hervortretende Bereich des Verbindungsschafts 136 ist von einem Konterelement 145 umgeben, das eine Durchgangsbohrung 146 umfaßt, in deren Rand eine spiralförmige Ausnehmung eingearbeitet ist, deren Form der spiralförmigen Aufweitung 138 des Verbindungsschafts 136 entspricht. Dadurch wird eine flächenhafte Anlage der Aufweitung 138 an der Wand der Bohrung 146 gewährleistet. Das Konterelement 145 weist einen als Ausschnitt aus einer Kugeloberfläche ausgebildeten Außenmantel 147 auf, auf dem eine Hülse 148 mit einer dem Außenmantel 147 entsprechenden Stirnfläche 149 aufsitzt. Eine der Stirnfläche 149 gegenüberliegende Endfläche 150 der Hülse 148 kommt an der Unterseite 137 des zweiten Fügeteils 131 zur Anlage. Die Hülse 148 ist somit zwischen dem Außenmantel 147 des Konterelements 145 und der Endseite 137 des zweite Fügeteils 131 eingespannt.

Das Verbindungselement 134 läßt sich in die Durchgangsbohrungen 132 und 133 der beiden Fügeteile 130 bzw. 131 einführen und aufgrund der spiralförmigen Anordnung der Aufweitung 138 in die Durchgangsbohrung 146 des Konterelements 145 eindrehen. Anschließend wird das Verbindungselement durch Einfügen eines in der Zeichnung nicht dargestellten Spreizelements in die Zentralbohrung 146 des Verbindungselements 134 so weit auseinandergespreizt, daß der Verbindungskopf 135 flächig an der Wand der Durchgangsbohrung 132 des ersten Fügeteils 130 anliegt und gleichzeitig die spiralförmige Aufweitung 138 des Verbindungsschafts 136 flächig an der Durchgangsbohrung 146 des Konterelements 145 anliegt.

Eine elastische Verformung des Verbindungselements 134 ist nur für das Aufspreizen erforderlich, beim Einfügen muß es nicht zusätzlich zusammengedrückt werden. Somit eignet sich eine derartige Ausführungsform insbesondere für extrem spröde Materialien, denn es ist nur eine sehr geringe Verformung erforderlich.

In Figur 12 ist in schematischer Darstellung ein Montagewerkzeug 160 dargestellt, das auf einen durch eine Öffnung in einem ersten Fügeteil 161 hindurchgeführten Verbindungskopf 162 eines Verbindungselements 174 aufgesetzt werden kann zum Einziehen eines in der Zeichnung nicht dargestellten Spreizelements in eine in der Zeichnung ebenfalls nicht dargestellte Aufnahme des Verbindungselements 174. Das Montagewerkzeug 160 ist zangenartig ausgebildet und umfaßt einen Haltearm 163 mit einer zur Anlage an den Verbindungskopf 162 ausgebildeten Anlageplatte 164 und einem am gegenüberliegenden Ende angeordneten Griff 165 sowie einen über ein zwischen Griff 165 und Anlageplatte 164 angeordnetes Gelenk 166 verschwenkbar am Haltearm 163 gelagerten Betätigungsarm 167. Der Betätigungsarm 167 ist als zweiarmiger Hebel ausgebildet und wird durch das Gelenk 166 in einen der Anlageplatte 164 zugewandten Zughebel 168 und einen dem Gelenk 166 gegenüberliegenden Druckhebel 169 unterteilt. Zughebel 168 und Anlageplatte 164 bilden das Zangenmaul des Montagewerkzeugs 160, das sich öffnet, wenn der Druckhebel 169 in Richtung auf den Griff 165 verschwenkt wird.

Am Zughebel 168 ist ein in der Zeichnung lediglich schematisch dargestelltes Meß- und Halteglied 170 angelenkt, in dem eine mit dem Spreizelement verbundene, durch einen Durchgangskanal des Verbindungselements 174 sowie durch eine Durchgangsbohrung 171 der Anlageplatte 164 hindurchgeführte Zugstange 172 verankert werden kann. Hierzu läßt sich ein aus der Anlageplatte 164 in Richtung auf das Meß- und Halteglied 170 hervortretender Endbereich 173 der Zugstange 172, der T-förmig ausgebildet ist, in eine entsprechende Öffnung 174 des Meß- und Halteglieds 170 einführen, so daß die Zugstange 172 in Längsrichtung unverschieblich im Meß- und Halteglied 170 gehalten ist. Wird der Druckhebel 169 in Richtung auf den Griff 165 verschwenkt, so wird dadurch über das Meß- und Halteglied 170 eine Zugkraft auf die Zugstange 172 ausgeübt, so daß das mit der Zugstange 172 verbundene Spreizelement in die Aufnahme des Verbindungselements 174 eingezogen werden kann. Das Montagewerkzeug 160 stützt sich dabei mit der Anlageplatte 164 lediglich auf den Verbindungskopf 162 ab, so daß das erste Fügeteil 161 beim Einziehen des Spreizelements keiner Belastung ausgesetzt wird.

Das Meß- und Halteglied 170 dient nicht nur dazu, die Zugstange 172 aufzunehmen, sondern auch dazu, den von der Zugstange 172 beim Einziehen des Spreizelements zurückgelegten Weg und damit die Lage des Spreizelements im Verbindungselement 174 sowie die auf die Zugstange 172 ausgeübte Zugkraft zu bestimmen. Hierzu wird vom Meß- und Halteglied 170 der in der Zeichnung mit s bezeichnete Abstand zur Anlageplatte 164 ermittelt. Der unterschiedliche Abstand zwischen Meß- und Halteglied 170 und Anlageplatte 164 vor und nach dem Verschwenken des Druckhebels 169 in Richtung auf den Griff 165 entspricht dem von der Zugstange zurückgelegten Weg beim Einziehen des Spreizelements. Außerdem wird mit Hilfe eines Kraftmessers die Kraft gemessen, mit der die Zugstange 172 nach oben gezogen wurde. Dadurch läßt sich die Position des Spreizelements innerhalb des Verbindungselements bestimmen, und es läßt sich eine kontrollierte Kraft auf das Spreizelement ausüben.

## Patentansprüche

1. Verfahren zur Übertragung von Kräften zwischen zwei Fügeteilen, bei dem man ein Verbindungselement in zwei korrespondierende Öffnungen der beiden Fügeteile einführt, wobei man
eine an einem Verbindungskopf des Verbindungselements angeordnete, schräg zur Kraftübertragungsrichtung verlaufende erste Hinterschneidung.an eine mit dem ersten Fügeteil in Wirkverbindung stehende erste Anlagefläche anlegt,
einen vom Verbindungskopf ausgehenden Verbindungsschaft mit einer Aufweitung, die eine der ersten Hinterschneidung zugewandte zweite Hinterschneidung aufweist, in die Öffnung des zweiten Fügeteils einführt,
während des Einführens den Verbindungsschaft, der einen von einer schaftseitigen Endfläche des Verbindungselements ausgehenden, in Kraftübertragungsrichtung verlaufenden und sich bis in Höhe der Aufweitung erstreckenden Längsschlitz umfaßt, im Bereich der Aufweitung zusammendrückt, und
nach dem Einführen des Verbindungsschafts ein den Verbindungsschaft im Bereich der Aufweitung aufspreizendes Spreizelement in eine von einer Endfläche des Verbindungselements ausgehende, in Kraftübertragungsrichtung verlaufende, sich bis in Höhe des Längsschlitzes erstreckende Aufnahme des Verbindungselements einführt,
**dadurch gekennzeichnet, daß** man den Verbindungsschaft so in die Öffnung des zweiten Fügeteils einführt, daß er sich vor Einführen des Spreizelements in die Aufnahme des Verbindungselements wieder aufspreizt und mit der zweiten Hinterschneidung flächig an einer mit dem zweiten Fügeteil in Wirkverbindung stehenden zweiten Anlagefläche anliegt.

2. Verfahren nach Anspruch 1, **dadurch gekennzeichnet, daß** man ein mehrere, einander quer zur Kraftübertragungsrichtung mittig überkreuzende Längsschlitze aufweisendes Verbindungselement verwendet.

3. Verfahren nach Anspruch 1 oder 2, **dadurch gekennzeichnet, daß** man ein Verbindungselement verwendet, welches rotationssymmetrisch ausgestaltet ist.

4. Verfahren nach einem der voranstehenden Ansprüche, **dadurch gekennzeichnet, daß** man einen zylinderförmig ausgebildeten Verbindungsschaft verwendet.

5. Verfahren nach einem der voranstehenden Ansprüche, **dadurch gekennzeichnet, daß** man einen Verbindungsschaft mit einer kegelstumpfförmig ausgestalteten Aufweitung verwendet, die einen Konus bildet.

6. Verfahren nach Anspruch 5, **dadurch gekennzeichnet, daß** man einen Verbindungsschaft mit einer Aufweitung verwendet, die einen Konuswinkel von ungefähr 2° bis ungefähr 8° aufweist.

7. Verfahren nach Anspruch 5, **dadurch gekennzeichnet, daß** man einen Verbindungsschaft mit einer Aufweitung verwendet, die einen Konuswinkel von etwa 3° bis etwa 5° aufweist.

8. Verfahren nach einem der voranstehenden Ansprüche, **dadurch gekennzeichnet, daß** man einen Verbindungskopf verwendet, der einen von einer kopfseitigen Endfläche des Verbindungselements ausgehenden, in Kraftübertragungsrichtung verlaufenden und sich bis in Höhe der ersten Hinterschneidung erstreckenden Längsschlitz umfaßt.

9. Verfahren nach einem der voranstehenden Ansprüche, **dadurch gekennzeichnet, daß** man ein Verbindungselement mit einem Verbindungskopf und einen Verbindungsschaft verwendet, die spiegelbildlich zueinander ausgestaltet sind, wobei eine Oberflächennormale der Spiegelebene kolinear zur Kraftübertragungsrichtung verläuft und wobei der am Verbindungskopf angeordnete Längsschlitz quer zu dem am Verbindungsschaft angeordneten Längsschlitz ausgerichtet ist.

10. Verfahren nach einem der voranstehenden Ansprüche, **dadurch gekennzeichnet, daß** man nach dem Einführen des Verbindungselements in die Öffnungen der beiden Fügeteile in die Längsschlitze des Verbindungselements eine verformbare Füllmasse einbringt und anschließend aushärtet.

11. Verfahren nach einem der voranstehenden Ansprüche, **dadurch gekennzeichnet, daß** man ein Konterelement, das den Verbindungsschaft im Bereich der Aufweitung umhüllt, flächenhaft an den Außenmantel der Aufweitung anlegt.

12. Verfahren nach Anspruch 11, **dadurch gekennzeichnet, daß** man als Konterelement eine Hülse verwendet.

13. Verfahren nach Anspruch 11 oder 12, **dadurch gekennzeichnet, daß** man ein Konterelement verwendet mit einer sich konisch erweiternden Durchgangsbohrung, wobei der Konuswinkel der Durchgangsbohrung dem Konuswinkel der Aufweitung entspricht.

14. Verfahren nach Anspruch 11, 12 oder 13, **dadurch gekennzeichnet, daß** man ein mit dem zweiten Fügeteil verbindbares Konterelement verwendet.

15. Verfahren nach einem der Ansprüche 11 bis 14, **dadurch gekennzeichnet, daß** man ein in eine Öffnung des zweiten Fügeteils einführbares Konterelement verwendet, das quer zur Kraftübertragungsrichtung in mehrere, sich jeweils über einen begrenzten Umfangsbereich erstrekkende Segmente unterteilt ist.

16. Verfahren nach einem der voranstehenden Ansprüche, **dadurch gekennzeichnet, daß** man eine rotationssymmetrisch ausgestaltete Aufnahme verwendet.

17. Verfahren nach einem der voranstehenden Ansprüche, **dadurch gekennzeichnet, daß** man ein zylinderförmig ausgestaltetes Spreizelement verwendet.

18. Verfahren nach einem der Ansprüche 1 bis 16, **dadurch gekennzeichnet, daß** man ein kegelstumpfförmig ausgebildetes Spreizelement verwendet, das einen Spreizkonus bildet.

19. Verfahren nach einem der Ansprüche 1 bis 18, **dadurch gekennzeichnet, daß** man ein an seinem Mantel eine Riffelung aufweisendes Spreizelement verwendet.

20. Verfahren nach einem der Ansprüche 1 bis 18, **dadurch gekennzeichnet, daß** man ein an seinem Mantel eine Verzahnung aufweisendes Spreizelement verwendet.

21. Verfahren nach einem der Ansprüche 1 bis 20, **dadurch gekennzeichnet, daß** man eine Aufnahme verwendet, deren Wand eine Verzahnung aufweist.

22. Verfahren nach einem der Ansprüche 1 bis 21, **dadurch gekennzeichnet, daß** man in die Aufnahme im Bereich zwischen eingeführtem Spreizelement und Endfläche des Verbindungselements eine verformbare Füllmasse einbringt und anschließend in der Aufnahme aushärtet.

23. Verfahren nach einem der Ansprüche 1 bis 22, **dadurch gekennzeichnet, daß** man ein in zwei oder mehrere getrennte Segmente unterteiltes Verbindungselement verwendet, indem sich die Längsschlitze durch das Verbindungselement hindurch erstrecken.

24. Verfahren zur Übertragung von Kräften zwischen zwei Fügeteilen, bei dem man ein Verbindungselement in zwei korrespondierende Öffnungen der beiden Fügeteile einführt, wobei man einen Verbindungskopf des Verbindungselements an eine mit dem ersten Fügeteil in Wirkverbindung stehende erste Anlagefläche anlegt und wobei man einen vom Verbindungskopf ausgehenden Verbindungsschaft in die Öffnung des zweiten Fügeteils einführt,
**dadurch gekennzeichnet, daß**
man ein mittels eines in Kraftübertragungsrichtung verlaufenden, sich durch das Verbindungselement, hindurch erstreckenden Längsschlitzes in zwei oder mehr getrennte Segmente unterteiltes Verbindungselement verwendet und dieses an eine mit dem zweiten Fügeteil in Wirkverbindung stehende zweite Anlagefläche anlegt und daß man ein die Segmente auseinanderspreizendes Spreizelement in eine von einer Endfläche des Verbindungselements ausgehende, in Kraftübertragungsrichtung verlaufende Aufnahme des Verbindungselements einführt.

25. Verfahren nach einem der Ansprüche 1 bis 24, **dadurch gekennzeichnet, daß** man ein Verbindungselement mit einem die Aufnahme mit der gegenüberliegenden Endfläche des Verbindungselements verbindenden Durchgangskanal verwendet.

26. Verfahren nach Anspruch 25, **dadurch gekennzeichnet, daß** man das Spreizelement mit Hilfe eines den Durchgangskanal hindurchgreifenden Zugelements in die Aufnahme einzieht.

27. Verfahren nach Anspruch 26, **dadurch gekennzeichnet, daß** man ein Zugelement mit einer bei Überschreiten einer maximalen Zugbelastung brechenden Sollbruchstelle verwendet.

28. Verfahren nach Anspruch 27, **dadurch gekennzeichnet, daß** man ein Zugelement mit einer derart ausgebildeten Sollbruchstelle verwendet, daß die maximale Zugbelastung bei Erreichen der gewünschten Endposition des Spreizelements erzielt wird.

29. Verfahren nach Anspruch 26, 27 Oder 28, **dadurch gekennzeichnet, daß** man ein als Zugstange ausgebildetes Zugelement verwendet.

30. Verfahren nach Anspruch 27, 28 oder 29, **dadurch gekennzeichnet, daß** man ein als Zugdraht oder Zugseil ausgebildetes Zugelement verwendet.

31. Verfahren nach einem der voranstehenden Ansprüche, **dadurch gekennzeichnet, daß** man einen Verbindungskopf mit einer als ringförmiger Ausschnitt aus einer Kugeloberfläche ausgestalteten ersten Hinterschneidung verwendet.

32. Verfahren nach einem der voranstehenden Ansprüche, **dadurch gekennzeichnet, daß** man einen Verbindungsschaft mit einer als ringförmiger Ausschnitt aus einer Kugeloberfläche ausgestalteten zweiten Hinterschneidung verwendet.

33. Verfahren nach einem der Ansprüche 11 bis 32, **dadurch gekennzeichnet, daß** man ein Konterelement mit einem als ringförmiger Ausschnitt aus einer Kugeloberfläche ausgestalteten Außenmantel verwendet.

34. Verfahren nach einem der Ansprüche 11 bis 33, **dadurch gekennzeichnet, daß** man eine das Konterelement umhüllende, sich flächenhaft an dessen Außenmantel anlegende Buchse mit dem zweiten Fügeteil verbindet.

35. Verfahren nach Anspruch 34, **dadurch gekennzeichnet, daß** man eine eine Vorspannung auf das Konterelement ausübende Buchse verwendet.

36. Verfahren nach Anspruch 35, **dadurch gekennzeichnet, daß** man eine in Längsrichtung geschlitzte Buchse verwendet.

37. Verfahren nach Anspruch 36, **dadurch gekennzeichnet, daß** man ein die Buchse mit einer nach innen gerichteten Radialkraft beaufschlagendes Federelement verwendet.

38. Verfahren nach einem der Ansprüche 34 bis 37, **dadurch gekennzeichnet, daß** man in der Buchse ein das Konterelement im Abstand zu dem mit der Buchse verbindbaren zweiten Fügeteil haltendes Distanzelement anordnet.

39. Verfahren nach Anspruch 38, **dadurch gekennzeichnet, daß** man ein als Distanzring ausgestaltetes Distanzelement verwendet.

40. Verfahren nach Anspruch 38, **dadurch gekennzeichnet, daß** man ein als Distanzscheibe ausgebildetes Distanzelement verwendet, wobei in einer dem Konterelement zugewandten Oberseite der Distanzscheibe eine Vertiefung eingearbeitet ist und wobei das Konterelement von den Randbereichen der Vertiefung gehalten ist.

41. Verfahren nach Anspruch 40, **dadurch gekennzeichnet, daß** man eine derart ausgestaltete Distanzscheibe und Buchse verwendet, daß die dem Konterelement zugewandte Innenwand der Buchse und die dem Konterelement zugewandte Oberseite der Distanzscheibe eine gemeinsame, einen ringförmigen Ausschnitt aus einer Kugeloberfläche darstellende Anlagefläche bilden für den als ringförmiger Ausschnitt aus einer Kugeloberfläche ausgebildeten Außenmantel des Konterelements.

42. Verfahren nach einem der voranstehenden Ansprüche, **dadurch gekennzeichnet, daß** man zwischen den beiden Fügeteilen ein eine Druckkraft übertragendes Druckelement positioniert.

43. Verfahren nach Anspruch 42, **dadurch gekennzeichnet, daß** man ein Druckelement verwendet, dessen Wärmeausdehnungskoeffizient an den Wärmeausdehnungskoeffizienten des Verbindungselements angepaßt ist.

44. Verfahren nach Anspruch 42 oder 43, **dadurch gekennzeichnet, daß** man ein den Verbindungsschaft ringförmig umgebendes Druckelement verwendet.

45. Verfahren nach Anspruch 42, 43 oder 44, **dadurch gekennzeichnet, daß** man ein als Hohlzylinder ausgebildetes Druckelement verwendet.

46. Verfahren nach Anspruch 44 oder 45, **dadurch gekennzeichnet, daß** man das Druckelement auf die Buchse aufsetzt, wobei eine der Buchse zugewandte Stirnwand des Druckelements eine Vertiefung zur Aufnahme des dem Druckelement zugewandten Endbereichs der Buchse aufweist.

47. Verfahren nach einem der voranstehenden Ansprüche, **dadurch gekennzeichnet, daß** man ein Verbindungselement verwendet, dessen Verbindungskopf und Verbindungsschaft jeweils eine weitere, schräg zur Belastungsrichtung verlaufende dritte bzw. vierte Hinterschneidung aufweisen, wobei diese Hinterschneidungen einander abgewandt sind.

48. Verfahren nach einem der voranstehenden Ansprüche, **dadurch gekennzeichnet, daß** man ein aus einem keramischen Material hergestelltes Verbindungselement und/oder Spreizelement verwendet.

49. Verfahren nach einem der Ansprüche 11 bis 48, **dadurch gekennzeichnet, daß** man ein aus einem keramischen Material hergestelltes Konterelement verwendet.

50. Verfahren nach einem der Ansprüche 42 bis 49, **dadurch gekennzeichnet, daß** man ein aus einem keramischen Material hergestelltes Druckelement verwendet.

51. Verfahren nach einem der Ansprüche 38 bis 50, **dadurch gekennzeichnet, daß** man ein aus einem keramischen Material hergestelltes Distanzelement verwendet.

52. Verfahren nach einem der voranstehenden Ansprüche, **dadurch gekennzeichnet, daß** man ein aus einer Faserkeramik hergestelltes Verbindungselement und/oder Spreizelement verwendet.

53. Verfahren nach einem der Ansprüche 11 bis 52, **dadurch gekennzeichnet, daß** man ein aus einer Faserkeramik hergestelltes Konterelement verwendet.

54. Verfahren nach einem der Ansprüche 42 bis 53, **dadurch gekennzeichnet, daß** man ein aus einer Faserkeramik hergestelltes Druckelement verwendet.

55. Verfahren nach einem der Ansprüche 38 bis 54, **dadurch gekennzeichnet, daß** man ein aus einer Faserkeramik hergestelltes Distanzelement verwendet.

56. Verfahren nach einem der Ansprüche 11 bis 55, **dadurch gekennzeichnet, daß** man ein wärmeisolierendes und/oder elektrisch isolierendes Konterelement verwendet.

57. Verfahren nach einem der Ansprüche 38 bis 56, **dadurch gekennzeichnet, daß** man ein wärmeisolierendes und/oder elektrisch isolierendes Distanzelement verwendet.

58. Verfahren nach einem der Ansprüche 34 bis 57, **dadurch gekennzeichnet, daß** man eine aus einem elastisch und plastisch verformbaren Werkstoff hergestellte Buchse verwendet.

59. Verfahren nach einem der Ansprüche 26 bis 58, **dadurch gekennzeichnet, daß** man ein mit dem Zugelement in Eingriff bringbares, eine kontrollierte Zugkraft auf das Zugelement ausübendes Montagewerkzeug verwendet.

60. Verfahren nach Anspruch 59, **dadurch gekennzeichnet, daß** man ein Montagewerkzeug verwendet, das eine die Lage des Spreizelements innerhalb der Aufnahme und/oder die auf das Zugelement ausgeübte Zugkraft feststellende Meßeinrichtung umfaßt.

61. Verfahren nach Anspruch 59 oder 60, **dadurch gekennzeichnet, daß** man ein auf dem Verbindungskopf abstützbares Montagewerkzeug zum Ausüben einer Zugkraft auf das Zugelement verwendet.

62. Vorrichtung zur Übertragung von Kräften zwischen einem ersten Fügeteil (10; 71; 95; 114; 130) und einem zweiten Fügeteil (12; 72; 96; 115; 131) und insbesondere zur Durchführung des Verfahrens nach einem der voranstehenden Ansprüche,
umfassend das zweite Fügeteil (12; 72; 96; 115; 131),
mit einem Verbindungselement (18; 54; 70; 101; 116; 134), das
einen Verbindungskopf (20; 55; 74; 102; 117; 135) mit einer schräg zur Kraftübertragungsrichtung (28) verlaufenden ersten Hinterschneidung (30; 58; 77; 120) sowie
einen vom Verbindungskopf (20; 55; 74; 102; 117; 135) ausgehenden Verbindungsschaft (24; 56; 75; 103; 118; 136), welcher eine Aufweitung (34; 138), die eine der ersten Hinterschneidung (30; 58; 77; 120) zugewandte zweite Hinterschneidung (42; 59; 76; 121; 140) aufweist, und einen von einer schaftseitigen Endfläche (36; 63; 79; 104; 144) des Verbindungselements (18; 54; 70; 101; 116; 134) ausgehenden, in Kraftübertragungsrichtung (28) verlaufenden und sich bis in Höhe der Aufweitung (34; 138) erstreckenden Längsschlitz (48; 64, 65; 75a; 105; 142) umfaßt,
aufweist, und
mit einem den Verbindungsschaft (24; 56; 75; 103; 118; 136) im Bereich der Aufweitung (34; 138) aufspreizenden Spreizelement (52; 67; 84; 125), das in eine von einer Endfläche (38; 62; 79) des Verbindungselements (18; 54; 70; 101; 116; 134) ausgehende, in Kraftübertragungsrichtung (28) verlaufende, sich bis in Höhe des Längsschlitzes (48; 64, 65; 75a; 105; 142) erstreckende Aufnahme (50; 66; 81; 124; 141) des Verbindungselements (18; 54; 70; 101; 116; 134) einführbar ist,
**dadurch gekennzeichnet,**
**daß** der Verbindungsschaft (24; 56; 75; 103; 118; 136) so ausgebildet ist, daß er vor Einführen des Spreizelements (52; 67; 84; 125) in die Aufnahme (50; 66; 81; 124; 141) des Verbindungselements (18; 54; 70; 101; 116; 134) mit der zweiten Hinterschneidung (42; 59; 76; 121; 140) flächig an einer mit der zweiten Hinterschneidung (42; 59; 76; 121; 140) korrespondierenden zweiten Anlagefläche anlegbar ist, wobei die zweite Anlagefläche mit dem zweiten Fügeteil (12; 72; 96; 115; 131) so in Wirkverbindung steht, daß die von der zweiten Hinterschneidung (42; 59; 76; 121; 140) auf die zweite Anlagefläche ausübbare Kraft auf das zweite Fügeteil (12; 72; 96; 115; 131) übertragbar ist.

63. Vorrichtung nach Anspruch 62, **dadurch gekennzeichnet, daß** das Verbindungselement (54) mehrere, einander quer zur Kraftübertragungsrichtung (28) mittig überkreuzende Längsschlitze (64, 65) umfaßt.

64. Vorrichtung nach Anspruch 62 oder 63, **dadurch gekennzeichnet, daß** das Verbindungselement (18; 54; 70; 101; 116; 134) rotationssymmetrisch ausgestaltet ist.

65. Vorrichtung nach Anspruch 62, 63 oder 64, **dadurch gekennzeichnet, daß** der Verbindungsschaft (24; 56; 75; 103; 118; 136) zylinderförmig ausgebildet ist.

66. Vorrichtung nach einem der Ansprüche 62 bis 65, **dadurch gekennzeichnet, daß** die Aufweitung (34; 138) kegelstumpfförmig ausgestaltet ist und einen Konus bildet.

67. Vorrichtung nach Anspruch 66, **dadurch gekennzeichnet, daß** die Aufweitung (34; 138) einen Konuswinkel von ungefähr 2° bis ungefähr 8° aufweist.

68. Vorrichtung nach Anspruch 66, **dadurch gekennzeichnet, daß** die Aufweitung (34; 138) einen Konuswinkel von etwa 3° bis etwa 5° aufweist.

69. Vorrichtung nach einem der Ansprüche 62 bis 68, **dadurch gekennzeichnet, daß** der Verbindungskopf (55; 135) einen von einer kopfseitigen Endfläche (62; 143) des Verbindungselements (54; 134) ausgehenden, in Kraftübertragungsrichtung (28) verlaufenden und sich bis in Höhe der ersten Hinterschneidung (58) erstreckenden Längsschlitz (64; 142) umfaßt.

70. Vorrichtung nach einem der Ansprüche 62 bis 69, **dadurch gekennzeichnet, daß** der Verbindungskopf (55; 117) und der Verbindungsschaft (56; 118) spiegelbildlich zueinander ausgebildet sind, wobei eine Oberflächennormale der Spiegelebene (57; 119) kolinear zur Kraftübertragungsrichtung (28) verläuft und wobei der am Verbindungskopf (55; 117) angeordnete Längsschlitz (64; 142) quer zu dem am Verbindungsschaft (56; 118) angeordneten Längsschlitz (65; 142) ausgerichtet ist.

71. Vorrichtung nach einem der Ansptüche 62 bis 70, **dadurch gekennzeichnet, daß** die Vorrichtung eine in die Längsschlitze (48; 64, 65; 75a; 105; 142) des Verbindungselements (18; 54; 70; 101; 116; 134) einbringbare, in den Längsschlitzen aushärtbare Füllmasse umfaßt.

72. Vorrichtung nach einem der Ansprüche 62 bis 71, **dadurch gekennzeichnet, daß** die Vorrichtung ein den Verbindungsschaft (24; 56; 75; 103; 118; 136) im Bereich der Aufweitung (34; 138) umhüllendes, flächenhaft an den Außenmantel (40) der Aufweitung (34; 138) anlegbares Konterelement (44; 85; 106; 145) umfaßt.

73. Vorrichtung nach Anspruch 72, **dadurch gekennzeichnet, daß** das Konterelement als Hülse (44; 85; 106; 145) ausgebildet ist.

74. Vorrichtung nach Anspruch 72 oder 73, **dadurch gekennzeichnet, daß** das Konterelement (44; 85) eine sich konisch erweiternde Durchgangsbohrung (46; 86) umfaßt, wobei der Konuswinkel der Durchgangsbohrung (46; 86) dem Konuswinkel der Aufweitung (34) entspricht.

75. Vorrichtung nach Anspruch 72, 73 oder 74, **dadurch gekennzeichnet, daß** das Konterelement (44; 85; 106; 145) mit dem zweiten Fügeteil (12; 72; 96; 115; 131) verbindbar ist.

76. Vorrichtung nach einem der Ansprüche 72 bis 75, **dadurch gekennzeichnet, daß** das Konterelement in eine Öffnung des zweiten Fügeteils einführbar und quer zur Kraftübertragungsrichtung in mehrere, sich jeweils über einen begrenzten Umfangsbereich erstreckende Segmente unterteilt ist.

77. Vorrichtung nach einem der Ansprüche 62 bis 76, **dadurch gekennzeichnet, daß** die Aufnahme (50; 66; 81; 124; 141) rotationssymmetrisch ausgestaltet ist.

78. Vorrichtung nach einem der Ansprüche 62 bis 77, **dadurch gekennzeichnet, daß** das Spreizelement (52; 67; 125) zylinderförmig ausgestaltet ist.

79. Vorrichtung nach einem der Ansprüche 62 bis 77, **dadurch gekennzeichnet, daß** das Spreizelement kegelstumpfförmig ausgebildet ist und einen Spreizkonus (84) bildet.

80. Vorrichtung nach einem der Ansprüche 62 bis 79, **dadurch gekennzeichnet, daß** das Spreizelement an seinem Mantel eine Riffelung aufweist.

81. Vorrichtung nach einem der Ansprüche 62 bis 79, **dadurch gekennzeichnet, daß** am Mantel des Spreizelements eine Verzahnung angeordnet ist.

82. Vorrichtung nach einem der Ansprüche 62 bis 81, **dadurch gekennzeichnet, daß** an der Wand der Aufnahme eine Verzahnung angeordnet ist.

83. Vorrichtung nach einem der Ansprüche 62 bis 82, **dadurch gekennzeichnet, daß** die Vorrichtung eine verformbar in die Aufnahme (81) im Bereich zwischen eingeführtem Spreizelement (84) und Endfläche (79) des Verbindungselements (70) einbringbare, in der Aufnahme (81) aushärtbare Füllmasse umfaßt.

84. Vorrichtung nach einem der Ansprüche 62 bis 83, **dadurch gekennzeichnet, daß** sich der Längsschlitz durch das Verbindungselement hindurch erstreckt und das Verbindungselement in zwei getrennte Segmente unterteilt.

85. Vorrichtung zur Durchführung des Verfahrens nach einem der Ansprüche 1 bis 61 mit einem einen Verbindungskopf und einen Verbindungsschaft aufweisenden Verbindungselement, **dadurch gekennzeichnet, daß** das Verbindungselement mittels eines in Kraftübertragungsrichtung verlaufenden, sich durch das Verbindungselement hindurch erstreckenden Längsschlitzes in zwei oder mehr getrennte Segmente unterteilt ist und daß die Vorrichtung ein die Segmente auseinanderspreizendes Spreizelement umfaßt, das in eine von einer Endfläche des Verbindungselements ausgehende, in Kraftübertragungsrichtung verlaufende Aufnahme des Verbindungselements einführbar ist.

86. Vorrichtung nach einem der Ansprüche 62 bis 85, **dadurch gekennzeichnet, daß** das Verbindungselement (70) einen die Aufnahme (81) mit der der Aufnahme (81) gegenüberliegenden Endfläche (78) des Verbindungselements (70) verbindenden Durchgangskanal (80) umfaßt.

87. Vorrichtung nach Anspruch 86, **dadurch gekennzeichnet, daß** die Vorrichtung ein den Durchgangskanal (80) hindurchgreifendes Zugelement (82) zum Einziehen des Spreizelements (84) in die Aufnahme (81) umfaßt.

88. Vorrichtung nach Anspruch 87, **dadurch gekennzeichnet, daß** das Zugelement (82) eine bei Überschreiten einer maximalen Zugbelastung brechende Sollbruchstelle aufweist.

89. Vorrichtung nach Anspruch 88, **dadurch gekennzeichnet, daß** die Sollbruchstelle derart ausgebildet ist, daß die maximale Belastung bei Erreichen der gewünschten Endposition des Spreizelements (84) innerhalb der Aufnahme (81) erzielt wird.

90. Vorrichtung nach Anspruch 87, 88 oder 89, **dadurch gekennzeichnet, daß** das Zugelement (82) als Zugstange ausgebildet ist.

91. Vorrichtung nach Anspruch 87, 88 oder 89, **dadurch gekennzeichnet, daß** das Zugelement als Zugdraht (82) ausgestaltet ist.

92. Vorrichtung nach einem der Ansprüche 62 bis 91, **dadurch gekennzeichnet, daß** die am Verbindungskopf (74) angeordnete erste Hinterschneidung (77) als ringförmiger Ausschnitt aus einer Kugeloberfläche ausgestaltet ist.

93. Vorrichtung nach einem der Ansprüche 62 bis 92, **dadurch gekennzeichnet, daß** die am Verbindungsschaft angeordnete zweite Hinterschneidung als ringförmiger Ausschnitt aus einer Kugeloberfläche ausgestaltet ist.

94. Vorrichtung nach einem der Ansprüche 72 bis 93, **dadurch gekennzeichnet, daß** ein Außenmantel (87) des den Verbindungsschaft (75) im Bereich der Aufweitung umgebenden Konterelements (85) als ringförmiger Ausschnitt aus einer Kugeloberfläche ausgestaltet ist.

95. Vorrichtung nach einem der Ansprüche 72 bis 94, **dadurch gekennzeichnet, daß** die Vorrichtung eine das Konterelement (85, 106) umhüllende, flächenhaft an dessen Außenmantel (87) anlegbare, mit dem zweiten Fügeteil (72; 96) verbindbare Buchse (89; 89a; 89b; 89c; 107) umfaßt.

96. Vorrichtung nach Anspruch 95, **dadurch gekennzeichnet, daß** die Buchse (89a; 89b; 89c) eine Vorspannung auf das Konterelement (85) ausübt.

97. Vorrichtung nach Anspruch 96, **dadurch gekennzeichnet, daß** die Buchse (89a; 89b; 89c) geschlitzt ist.

98. Vorrichtung nach Anspruch 97, **dadurch gekennzeichnet, daß** die Vorrichtung ein die Buchse (89b; 89c) mit einer nach innen gerichteten Radialkraft beaufschlagendes Federelement (93; 94) umfaßt.

99. Vorrichtung nach einem der Ansprüche 95 bis 98, **dadurch gekennzeichnet, daß** die Vorrichtung ein in der Buchse (89) angeordnetes, das Konterelement (85) im Abstand zu dem mit der Buchse (89) verbindbaren zweiten Fügeteil (72) haltendes Distanzelement (90) umfaßt.

100. Vorrichtung nach Anspruch 99, **dadurch gekennzeichnet, daß** das Distanzelement (90) als Distanzring ausgestaltet ist.

101. Vorrichtung nach Anspruch 99, **dadurch gekennzeichnet, daß** das Distanzelement als Distanzscheibe (90) ausgebildet ist, wobei in deren dem Konterelement (85) zugewandter Oberseite (91) eine Vertiefung (92) eingearbeitet ist und wobei das Konterelement (85) von den Randbereichen der Vertiefung (92) gehalten ist.

102. Vorrichtung nach Anspruch 101, **dadurch gekennzeichnet, daß** die dem Konterelement (85) zugewandte Oberseite (91) der Vertiefung (92) und die dem Konterelement (85) zugewandte Innenwand (88) der Buchse (89) eine gemeinsame, einen ringförmigen Ausschnitt aus einer Kugeloberfläche darstellende Anlagefläche für den als ringförmiger Ausschnitt einer Kugeloberfläche ausgestalteten Außenmantel (87) des Konterelements (85) bilden.

103. Vorrichtung nach einem der Ansprüche 62 bis 102, **dadurch gekennzeichnet, daß** die Vorrichtung ein zwischen den beiden Fügeteilen (95, 96) positionierbares, eine Druckkraft übertragendes Druckelement (110) umfaßt.

104. Vorrichtung nach Anspruch 103, **dadurch gekennzeichnet, daß** der Wärmeausdehnungskoeffizient des Druckelements (110) an den Wärmeausdehnungskoeffizienten des Verbindungselements (101) angepaßt ist.

105. Vorrichtung nach Anspruch 103 oder 104, **dadurch gekennzeichnet, daß** das Druckelement (110) den Verbindungsschaft (103) ringförmig umgibt.

106. Vorrichtung nach Anspruch 103, 104 oder 105, **dadurch gekennzeichnet, daß** das Druckelement als Hohlzylinder (110) ausgebildet ist.

107. Vorrichtung nach Anspruch 105 oder 106, **dadurch gekennzeichnet, daß** das Druckelement (110) auf die Buchse (107) aufsetzbar ist und auf einer der Buchse zugewandten Stirnwand eine Vertiefung zur Aufnahme eines dem Druckelement zugewandten Endbereichs (108) der Buchse aufweist.

108. Vorrichtung nach einem der Ansprüche 62 bis 107, **dadurch gekennzeichnet, daß** der Verbindungskopf (117) und der Verbindungsschaft (118) jeweils eine weitere, schräg zur Belastungsrichtung verlaufende dritte bzw. vierte Hinterschneidung (122 bzw. 123) aufweisen, wobei diese Hinterschneidungen (122, 123) einander abgewandt sind.

109. Vorrichtung nach einem der Ansprüche 62 bis 108, **dadurch gekennzeichnet, daß** das Verbindungselement und/oder das Spreizelement aus einem keramischen Material hergestellt sind.

110. Vorrichtung nach einem der Ansprüche 72 bis 109, **dadurch gekennzeichnet, daß** das Konterelement aus einem keramischen Material hergestellt ist.

111. Vorrichtung nach einem der Ansprüche 103 bis 110, **dadurch gekennzeichnet, daß** das Druckelement aus einem keramischen Material hergestellt ist.

112. Vorrichtung nach einem der Ansprüche 99 bis 111, **dadurch gekennzeichnet, daß** das Distanzelement aus einem keramischen Material hergestellt ist.

113. Vorrichtung nach einem der Ansprüche 62 bis 112, **dadurch gekennzeichnet, daß** das Verbindungselement und/oder das Spreizelement aus einer Faserkeramik hergestellt sind.

114. Vorrichtung nach einem der Ansprüche 72 bis 113, **dadurch gekennzeichnet, daß** das Konterelement aus einer Faserkeramik hergestellt ist.

115. Vorrichtung nach einem der Ansprüche 103 bis 114, **dadurch gekennzeichnet, daß** das Druckelement aus einer Faserkeramik hergestellt ist.

116. Vorrichtung nach einem der Ansprüche 99 bis 115, **dadurch gekennzeichnet, daß** das Distanzelement aus einer Faserkeramik hergestellt ist.

117. Vorrichtung nach einem der Ansprüche 72 bis 116, **dadurch gekennzeichnet, daß** das Konterelement aus einem wärmeisolierenden und/oder elektrisch isolierenden Material hergestellt ist.

118. Vorrichtung nach einem der Ansprüche 99 bis 117, **dadurch gekennzeichnet, daß** das Distanzelement aus einem wärmeisolierenden und/oder elektrisch isolierenden Material hergestellt ist.

119. Vorrichtung nach einem der Ansprüche 95 bis 118, **dadurch gekennzeichnet, daß** die Buchse aus einem elastisch und plastisch verformbaren Werkstoff hergestellt ist.

120. Vorrichtung nach einem der Ansprüche 87 bis 119, **dadurch gekennzeichnet, daß** die Vorrichtung als Bausatz ausgebildet ist und ein mit dem Zugelement (82) in Eingriff bringbares, eine kontrollierte Zugkraft auf das Zugelement (82) ausübendes Montagewerkzeug (160) umfaßt.

121. Vorrichtung nach Anspruch 120, **dadurch gekennzeichnet, daß** das Montagewerkzeug (160) eine die Lage des Spreizelements (84) innerhalb der Aufnahme (81) und/oder die auf das Zugelement (82) ausgeübte Zugkraft feststellende Meßeinrichtung (170) umfaßt.

122. Vorrichtung nach Anspruch 120 oder 121, **dadurch gekennzeichnet, daß** das Montagewerkzeug (160) zum Ausüben einer Zugkraft auf das Zugelement (82) auf dem Verbindungskopf (162) abstützbar ist.

## Claims

1. Method of transmission of forces between two joined parts, wherein a connection element is introduced into two corresponding openings in the two joined parts, wherein
a first undercut which is disposed on a connection head of the connection element and extends obliquely with respect to the direction of transmission of force is applied to a first contact surface which is operatively connected to the first joined part,
a connection shank starting from the connection head with an enlarged portion which has a second undercut facing the first undercut is introduced into the opening in the second joined part,
during the introduction, the connection shank, which has a longitudinal slot starting from the end surface at the shank end of the connection element, running in the direction of transmission of force and extending to the height of the enlarged portion, is compressed in the region of the enlarged portion, and
after the introduction of the connection shank, a spreading element which spreads the connection shank in the region of the enlarged portion is introduced into a receiving portion of the connection element which starts from an end surface of the connection element, runs in the direction of transmission of force and extends to the height of the longitudinal slot,
**characterised in that** the connection shank is introduced into the opening in the second joined part in such a way that before the introduction of the spreading element into the receiving portion of the connection element the connection shank spreads again and rests with the second undercut in surface contact on a second contact surface which is operatively connected to the second joined part.

2. Method as claimed in Claim 1, **characterised in that** a connection element is used which has a plurality of longitudinal slots which cross centrally over one another transversely of the direction of transmission of force.

3. Method as claimed in Claim 1 or 2, **characterised in that** a connection element is used which is of rotationally symmetrical construction.

4. Method as claimed in one of the preceding claims, **characterised in that** a connection shank is used which is of cylindrical construction.

5. Method as claimed in one of the preceding claims, **characterised in that** a connection shank is used with an enlarged portion constructed as a tapered frustum which forms a cone.

6. Method as claimed in Claim 5, **characterised in that** a connection shank is used with an enlarged portion having a cone angle of approximately 2° to approximately 8°.

7. Method as claimed in Claim 5, **characterised in that** a connection shank is used with an enlarged portion having a cone angle of approximately 3° to approximately 5°.

8. Method as claimed in one of the preceding claims, **characterised in that** a connection head is used which has a longitudinal slot starting from a head end surface of the connection element, running in the direction of transmission of force and extending to the height of the first undercut.

9. Method as claimed in one of the preceding Claims, **characterised in that** connection element is used with a connection head and a connection shank which are constructed in mirror image with one another, wherein a normal to surface of the mirror plane extends so as to be colinear with respect to the direction of transmission of force, and wherein the longitudinal slot disposed on the connection head is aligned transversely of the longitudinal slot disposed on the connection shank,

10. Method as claimed in one of the preceding claims, **characterised in that** after the introduction of the connection element into the openings of the two joined parts a deformable filling compound is introduced into the longitudinal slots of the connection element and is then hardened.

11. Method as claimed in one of the preceding claims, **characterised in that** a guard element which envelops the connection shank in the region of the enlarged portion rests in surface contact on the outer surface of the enlarged portion.

12. Method as claimed in Claim 11, **characterised in that** a sleeve is used as the guard element.

13. Method as claimed in Claim 11 or 12, **characterised in that** a guard element with a conically widening through bore is used, the cone angle of the through bore corresponding to the cone angle of the enlarged portion.

14. Method as claimed in Claim 11, 12 or 13, **characterised in that** a guard element which can be connected to the second joined part is used.

15. Method as claimed in one of Claims 11 to 14, **characterised in that** a guard element is used which can be introduced into an opening in the second joined part and which is divided, transversely of the direction of transmission of force, into a plurality of segments each extending over a limited circumferential region.

16. Method as claimed in one of the preceding claims, **characterised in that** a receiving portion is used which is of rotationally symmetrical construction.

17. Method as claimed in one of the preceding claims, **characterised in that** a spreading element of cylindrical construction is used.

18. Method as claimed in one of Claims 1 to 16, **characterised in that** a spreading element constructed as a tapered frustum is used which forms a spreading cone.

19. Method as claimed in one of Claims 1 to 18, **characterised in that** a spreading element is used which has a corrugation on its outer surface.

20. Method as claimed in one of Claims 1 to 18, **characterised in that** a spreading element is used which has a toothing on the outer surface.

21. Method as claimed in one of Claims 1 to 20, **characterised in that** a receiving portion is used which has a toothing on its wall.

22. Method as claimed in one of Claims 1 to 21, **characterised in that** a deformable filling compound is introduced into the receiving portion in the region between the inserted spreading element and the end surface of the connection element and the compound is subsequently hardened in the receiving portion.

23. Method as claimed in one of Claims 1 to 22, **characterised in that** a connection element is used which is divided into two or more separate segments, with the longitudinal slot extending through the connection element.

24. Method of transmission of forces between two joined parts, wherein a connection element is introduced into two corresponding openings in the two joined parts, wherein a connection head of the connection element is applied to a first contact surface which is operatively connected to the first joined part, and wherein a connection shank starting from the connection head is introduced into the opening in the second joined part,
**characterised in that**
a connection element is used which is divided in the longitudinal direction into two or more segments by means of a longitudinal slot running in the direction of transmission of force and extending through the connection element, and that this connection element is applied to a second contact surface which is operatively connected to the second joined part, and that a spreading element which spreads the segments is introduced into a receiving portion of the connection element which starts from an end surface of the connection element running in the direction of transmission of force.

25. Method as claimed in one of Claims 1 to 24, **characterised in that** a connection element is used with a through channel which connects the receiving portion to the opposing end surface of the connection element.

26. Method as claimed in Claim 25, **characterised in that** the spreading element is drawn into the receiving portion with the aid of a pulling element passing through the through channel.

27. Method as claimed in Claim 26, **characterised in that** a pulling element is used which has a predetermined breaking point which breaks when a maximum tensile load is exceeded.

28. Method as claimed in Claim 27, **characterised in that** a pulling element is used with a predetermined breaking point which is constructed so that the maximum tensile load is reached when the desired end position of the spreading element inside the receiving portion is reached.

29. Method as claimed in Claim 26, 27 or 28, **characterised in that** a pulling element constructed as a pull rod is used.

30. Method as claimed in Claim 27, 28 or 29, **characterised in that** a pulling element is used which is constructed as a traction wire or traction cable.

31. Method as claimed in one of the preceding claims, **characterised in that** a connection head is used with a first undercut constructed as an annular cut-out from a spherical surface.

32. Method as claimed in one of the preceding claims, **characterised in that** a connection shank is used with a second undercut constructed as an annular cut-out from a spherical surface.

33. Method as claimed in one of Claims 11 to 32, **characterised in that** a guard element is used with an outer surface constructed as an annular cut-out from a spherical surface.

34. Method as claimed in one of Claims 11 to 33, **characterised in that** a bush which envelops the guard element and rests in surface contact on the outer surface thereof is connected to the second joined part.

35. Method as claimed in Claim 34, **characterised in that** a bush is used which exerts an pre-tension on the guard element.

36. Method as claimed in Claim 35, **characterised in that** a bush is used which is slotted in the longitudinal direction.

37. Method as claimed in Claim 36, **characterised in that** a spring element is used which acts on the bush with an inwardly directed radial force.

38. Method as claimed in one of Claims 34 to 37, **characterised in that** a distance piece is disposed in the bush and holds the guard element spaced from the second joined part which can be connected to the bush.

39. Method as claimed in Claim 38, **characterised in that** a a distance piece constructed as a spacer ring is used.

40. Method as claimed in Claim 38, **characterised in that** a distance element constructed as a shim is used, wherein a recess is machined in the upper surface of the shim facing the guard element and the guard element is retained by the edge regions of the recess.

41. Method as claimed in Claim 40, **characterised in that** a shim and bush are used which are constructed in such a way that the inner wall of the bush facing the guard element and the upper face of the shim facing the guard element form a common contact surface constituting an annular cut-out from a spherical surface for the outer surface of the guard element constructed as an annular cut-out from a spherical surface.

42. Method as claimed in one of the preceding claims, **characterised in that** a pressure element which transmits a compressive force is positioned between the two joined parts.

43. Method as claimed in Claim 42, **characterised in that** a pressure element is used of which the coefficient of thermal expansion is matched to the coefficient of thermal expansion of the connection element.

44. Method as claimed in Claim 42 or 43, **characterised in that** a pressure element is used which surrounds the connection shank like a ring.

45. Method as claimed in Claim 42, 43 or 44, **characterised in that** a pressure element constructed as a hollow cylinder is used.

46. Method as claimed in Claim 44 or 45, **characterised in that** the pressure element is placed onto the bush, wherein a front wall of the pressure element facing the bush has a recess to receive the end region of the bush facing the pressure element.

47. Method as claimed in one one of the preceding claims, **characterised in that** a connection element is used in which the connection head and connection shank each include a further, third or fourth respectively, undercut extending obliquely with respect to the direction of loading, these undercuts facing away from one another.

48. Method as claimed in one of the preceding claims, **characterised in that** a connection element and/or guard element and/or spreading element made from a ceramic material is used.

49. Method as claimed in one of Claims 11 to 48, **characterised in that** a guard element made from a ceramic material is used.

50. Method as claimed in one of Claims 42 to 49, **characterised in that** a pressure element made from a ceramic material is used.

51. Method as claimed in one of Claims 38 to 50, **characterised in that** a distance piece made from a ceramic material is used.

52. Method as claimed in one of the preceding claims, **characterised in that** a connection element and/or spreading element made from a fibrous ceramic material is used.

53. Method as claimed in one of Claims 11 to 52, **characterised in that** a guard element made from a fibrous ceramic material is used.

54. Method as claimed in one of Claims 42 to 53, **characterised in that** a pressure element made from a fibrous ceramic material is used.

55. Method as claimed in one of Claims 38 to 54, **characterised in that** a distance piece made from a fibrous ceramic material is used.

56. Method as claimed in one of Claims 11 to 55, **characterised in that** a heat-insulating and/or electrically insulating guard element is used.

57. Method as claimed in one of Claims 38 to 56, **characterised in that** a heat-insulating and/or electrically insulating distance piece is used.

58. Method as claimed in one of Claims 34 to 57, **characterised in that** a bush is used which is made from an elastically and plastically deformable material.

59. Method as claimed in one of Claims 26 to 58, **characterised in that** an assembly tool is used which can be brought into engagement with the pulling element and exerts a controlled tensile force on the pulling element.

60. Method as claimed in Claim 59, **characterised in that** an assembly tool is used which includes a measuring arrangement which determines the position of the spreading element within the receiving portion and/or the tensile force exerted on the pulling element.

61. Method as claimed in Claim 59 or 60, **characterised in that** an assembly tool which can be supported on the connection head is used to exert a tensile force on the pulling element.

62. Device for the transmission of forces between a first joined part (10; 71; 95; 114; 130) and a second joined part (12; 72; 96; 115; 131) and in particular for carrying out the method as claimed in one of the preceding claims,
comprising the second joined part (12; 72; 96; 115; 131),
with a connection element (18; 54; 70; 101; 116; 134) which has
a connection head (20; 55; 74; 102; 117; 135) with a first undercut (30; 58; 77; 120) running obliquely with respect to the direction of transmission of force (28) as well as
a connection shank (24; 56; 75; 103; 118; 136) which starts from the connection head (20; 55; 74; 102; 117; 135) and has an enlarged portion (34; 138) which has a second undercut (42; 59; 76; 121; 140) facing the first undercut (30; 58; 77; 120), and a longitudinal slot (48; 64, 65; 75a; 105; 142) which starts from a shank end surface (36; 63; 79; 104; 144) of the connection element (18; 54; 70; 101; 116; 134), runs in the direction of transmission of force (28) and extends to the height of the enlarged portion (34; 138),
and
a spreading element (52; 67; 84; 125) which spreads the connection shank (24; 56; 75; 103; 118; 136) in the region of the enlarged portion (34; 138) and can be introduced into a receiving portion (50; 66; 81; 124; 141) of the connection element (18; 54; 70; 101; 116; 134) which starts from an end surface (38; 62; 79) of the connection element (18; 54; 70; 101; 116; 134), runs in the direction of transmission of force (28) and extends to the height of the longitudinal slot (48; 64, 65 ; 75a; 105; 142),
**characterised in that**
the connection shank (24; 56; 75; 103; 118; 136) is constructed in such a way that before the introduction of the spreading element (52; 67; 84; 125) into the receiving portion (50; 66; 81; 124; 141) of the connection element (18; 54; 70; 101; 116; 134) the connection shank can be applied with the second undercut (42; 59; 76; 121; 140) in surface contact on a second contact surface corresponding to the second undercut (42; 59; 76; 121; 140), the second contact surface being operatively connected to the second joined part (12; 72; 96; 115; 131) such that the force exertable on the second contact surface is transferable to the second joined part (12; 72; 96; 115; 131).

63. Device as claimed in Claim 62, **characterised in that** the connection element (54) includes a plurality of longitudinal slots (64, 65) which cross centrally over one another transversely of the direction of transmission of force (28).

64. Device as claimed in Claim 62 or 63, **characterised in that** the connection element (18; 54; 70; 101; 116; 134) is of rotationally symmetrical construction.

65. Device as claimed in Claim 62, 63 or 64, **characterised in that** the connection shank (24; 56; 75; 103; 118; 136) is of cylindrical construction.

66. Device as claimed in one of Claims 62 to 65, **characterised in that** the enlarged portion (34; 138) is constructed as a tapered frustum and forms a cone.

67. Device as claimed in Claim 66, **characterised in that** the enlarged portion (34; 138) has a cone angle of approximately 2° to approximately 8°.

68. Device as claimed in Claim 66, **characterised in that** the enlarged portion (34; 138) has a cone angle of approximately 3° to approximately 5°.

69. Device as claimed in one of Claims 62 to 68, **characterised in that** the connection head (55; 135) has a longitudinal slot (64; 142) starting from a head end surface (62; 143) of the connection element (54; 134), running in the direction of transmission of force (28) and extending to the height of the first undercut (58).

70. Device as claimed in one of Claims 62 to 69, **characterised in that** the connection head (55; 117) and a connection shank (56; 118) are constructed in mirror image with one another, wherein a normal to surface of the mirror plane (57; 119) extends so as to be colinear with respect to the direction of transmission of force (28), and wherein the longitudinal slot (64; 142) disposed on the connection head (55; 117) is aligned transversely of the longitudinal slot (65; 142) disposed on the connection shank (56; 118).

71. Device as claimed in one of Claims 62 to 70, **characterised in that** the device includes a filling compound which can be introduced into the longitudinal slots (48; 64, 65; 75a; 105; 142) of the connection element (18; 54; 70; 101; 116; 134) and can be hardened in the longitudinal slots.

72. Device as claimed in one of Claims 62 to 71, **characterised in that** the device includes a guard element which envelops the connection shank (24; 56; 75; 103; 118; 136) in the region of the enlarged portion (34; 138) and can rest in surface contact on the outer surface (40) of the enlarged portion (34; 138).

73. Device as claimed in Claim 72, **characterised in that** a sleeve (44; 85; 106; 145) is used as the guard element.

74. Device as claimed in Claim 72 or 73, **characterised in that** the guard element (44; 85) includes a conically widening through bore (46; 86), the cone angle of the through bore (46; 86) corresponding to the cone angle of the enlarged portion (34).

75. Device as claimed in Claim 72, 73 or 74, **characterised in that** the guard element (44; 85; 106; 145) can be connected to the second joined part (12; 72; 96; 115; 131).

76. Device as claimed in one of Claims 72 to 75, **characterised in that** the guard element can be introduced into an opening in the second joined part and transversely of the direction of transmission of force is divided into a plurality of segments each extending over a limited circumferential region.

77. Device as claimed in one of Claims 62 to 76, **characterised in that** the receiving portion (50; 66; 81; 124; 141) is of rotationally symmetrical construction.

78. Device as claimed in Claims 62 to 77, **characterised in that** the spreading element (52; 67; 125) is of cylindrical construction.

79. Device as claimed in one of Claims 62 to 77, **characterised in that** the spreading element is constructed as a tapered frustum which forms a spreading cone (84).

80. Device as claimed in one of Claims 62 to 79, **characterised in that** the spreading element has a corrugation on its outer surface.

81. Device as claimed in one of Claims 62 to 79, **characterised in that** a toothing is disposed on the outer surface of the spreading element.

82. Device as claimed in one of Claims 62 to 81, **characterised in that** a toothing is disposed on the wall of the receiving portion.

83. Device as claimed in one of Claims 62 to 82, **characterised in that** the device includes a filling compound which can be deformably introduced into the receiving portion (81) in the region between the inserted spreading element (84) and the end surface (79) of the connection element (70) and can be hardened in the receiving portion (81).

84. Device as claimed in one of Claims 62 to 83, **characterised in that** the longitudinal slot extends through the connection element and divides the connection element into two separate segments.

85. Device for carrying out the method as claimed in one of Claims 1 to 61, with a connection element having a connection head and a connection shank, **characterised in that** the connection element is divided in the longitudinal direction into two or more segments by means of a longitudinal slot running in the direction of transmission of force and extending through the connection element, and that the device includes a spreading element which spreads the segments and which can be introduced into a receiving portion of the connection element which starts from an end surface of the connection element running in the direction of transmission of force.

86. Device as claimed in one of Claims 62 to 85, **characterised in that** the connection element (70) includes a through channel (80) which connects the receiving portion (81) to the end surface (78) of the connection element (70) opposite the receiving portion (81).

87. Device as claimed in Claim 86, **characterised in that** the device includes a pulling element (82) passing through the through channel (80) in order to draw the spreading element (84) into the receiving portion (81).

88. Device as claimed in Claim 87, **characterised in that** the pulling element (82) has a predetermined breaking point which breaks when a maximum tensile load is exceeded.

89. Device as claimed in Claim 88, **characterised in that** the predetermined breaking point is constructed so that the maximum tensile load is reached when the desired end position of the spreading element (84) inside the receiving portion (81) is reached.

90. Device as claimed in Claim 87, 88 or 89, **characterised in that** the pulling element (82) is constructed as a pull rod.

91. Device as claimed in Claim 87, 88 or 89, **characterised in that** the pulling element is constructed as a traction wire (82) .

92. Device as claimed in one of Claims 62 to 91, **characterised in that** the first undercut (77) disposed on the connection head (74) is constructed as an annular cut-out from a spherical surface.

93. Device as claimed in one of Claims 62 to 92, **characterised in that** the second undercut disposed on the connection shank is constructed as an annular cut-out from a spherical surface.

94. Method as claimed in one of Claims 72 to 93, **characterised in that** an outer surface (87) of the guard element (85) surrounding the connection shank (75) in the region of the enlarged portion is constructed as an annular cut-out from a spherical surface.

95. Device as claimed in one of Claims 72 to 94, **characterised in that** the device includes a bush (89; 89a; 89b; 89c; 107) which envelops the guard element (85, 106), can rest in surface contact on the outer surface (87) thereof and can be connected to the second joined part (72; 96).

96. Device as claimed in Claim 95, **characterised in that** the bush (89a; 89b; 89c) exerts a pre-tension on the guard element (85).

97. Device as claimed in Claim 96, **characterised in that** the bush (89a; 89b; 89c) is slotted.

98. Device as claimed in Claim 97, **characterised in that** the device includes a spring element (93; 94) which acts on the bush (89b; 89c) with an inwardly directed radial force.

99. Device as claimed in one of Claims 95 to 98, **characterised in that** the device includes a distance piece (90) which is disposed in the bush (89) and holds the guard element (85) spaced from the second joined part (72) which can be connected to the bush (89).

100. Device as claimed in Claim 99. **characterised in that** the distance piece (90) is constructed as a spacer ring.

101. Device as claimed in Claim 99, **characterised in that** the distance element is constructed as a shim (90), wherein a recess (92) is machined in the upper surface (91) of the shim facing the guard element (85) and the guard element (85) is retained by the edge regions of the recess (92).

102. Device as claimed in Claim 101, **characterised in that** the upper face (91) of the recess (92) facing the guard element (85) and the inner wall (88) of the bush (89) facing the guard element (85) form a common contact surface constituting an annular cut-out from a spherical surface for the outer surface (87) of the guard element (85) constructed as an annular cut-out from a spherical surface.

103. Device as claimed in one of Claims 62 to 102, **characterised in that** the device includes a pressure element (110) which can be positioned between the two joined parts (95, 96) and transmits a compressive force.

104. Device as claimed in Claim 103, **characterised in that** the coefficient of thermal expansion of the pressure element (110) is matched to the coefficient of thermal expansion of the connection element (101.

105. Device as claimed in Claim 103 or 104, **characterised in that** the pressure element (110) surrounds the connection shank (103) like a ring.

106. Device as claimed in Claim 103, 104 or 105, **characterised in that** the pressure element is constructed as a hollow cylinder (110).

107. Device as claimed in Claim 105 or 106, **characterised in that** the pressure element (110) is placed onto the bush (107) and has on a front wall facing the bush a recess to receive an end region (108) of the bush facing the pressure element.

108. Device as claimed in one of Claims 62 to 107, **characterised in that** the connection head (117) and connection shank (118) each include a further, third or fourth respectively, undercut (122, 123 respectively) extending obliquely with respect to the direction of loading, these undercuts (122, 123) facing away from one another.

109. Device as claimed in one of Claims 62 to 108, **characterised in that** the connection element and/or the spreading element are made from a ceramic material.

110. Device as claimed in one of Claims 72 to 109, **characterised in that** the guard element is made from a ceramic material.

111. Device as claimed in one of Claims 103 to 110, **characterised in that** the pressure element is made from a ceramic material.

112. Device as claimed in one of Claims 99 to 111, **characterised in that** the distance piece is made from a ceramic material.

113. Device as claimed in one of Claims 62 to 112, **characterised in that** the connection element and/or the spreading element are made from a fibrous ceramic material.

114. Device as claimed in one of Claims 72 to 113, **characterised in that** the guard element is made from a fibrous ceramic material.

115. Device as claimed in one of Claims 103 to 114, **characterised in that** the pressure element is made from a fibrous ceramic material.

116. Device as claimed in one of Claims 99 to 115, **characterised in that** the distance piece is made from a fibrous ceramic material.

117. Device as claimed in one of Claims 72 to 116, **characterised in that** the guard element is made from a heat-insulating and/or electrically insulating material.

118. Device as claimed in one of Claims 99 to 117, **characterised in that** the distance piece is made from a heat-insulating and/or electrically insulating material.

119. Device as claimed in one of Claims 95 to 118, **characterised in that** the bush is made from an elastically and plastically deformable material.

120. Device as claimed in one of Claims 87 to 119, **characterised in that** the device is constructed as a kit and includes an assembly tool (160) which can be brought into engagement with the pulling element (82) and can exert a controlled tensile force on the pulling element (82).

121. Device as claimed in Claim 120, **characterised in that** the assembly tool (160) includes a measuring arrangement (170) which determines the position of the spreading element (84) within the receiving portion (81) and/or the tensile force exerted on the pulling element (82).

122. Device as claimed in Claim 120 or 121, **characterised in that** the assembly tool (160) can be supported on the connection head (162) to exert a tensile force on the pulling element (82).

## Revendications

1. Procédé de transmission des forces entre deux pièces d'assemblage, dans lequel on insère un élément de fixation dans deux orifices correspondants des deux pièces d'assemblage, sachant que
- une première contre-dépouille, s'étendant en oblique par rapport à la direction de transmission des forces et réalisée sur une tête de fixation de l'élément de fixation, est amenée en appui contre une première face d'appui en liaison active avec la première pièce d'assemblage,
- une tige de fixation, partant de la tête de fixation et comportant un élargissement, qui est muni d'une deuxième contre-dépouille, orientée vers la première contre-dépouille, est insérée dans l'orifice de la deuxième pièce d'assemblage,
- pendant l'introduction de la tige de fixation, on comprime dans la zone de l'élargissement ladite tige de fixation, qui comporte une fente longitudinale qui part d'une surface d'extrémité, côté tige, de l'élément de fixation en s'étendant dans le sens de transmission des forces jusqu'à hauteur de l'élargissement, et
- après l'introduction de la tige de fixation, un écarteur, destiné à dilater la tige de fixation dans la zone de l'élargissement, est introduit dans un logement de l'élément de fixation, lequel part d'une surface d'extrémité de l'élément de fixation en s'étendant dans le sens de transmission des forces jusqu'à hauteur de la fente longitudinale,
**caractérisé en ce qu'**on introduit la tige de fixation dans l'orifice de la deuxième pièce d'assemblage de telle sorte qu'elle s'écarte à nouveau avant l'introduction de l'écarteur dans le logement de l'élément de fixation et vient en appui avec la deuxième contre-dépouille avec toute la surface contre une deuxième face d'appui en liaison active avec la deuxième pièce d'assemblage.

2. Procédé selon la revendication 1, **caractérisé en ce qu'**on utilise un élément de fixation comportant plusieurs fentes longitudinales qui se croisent en leur milieu transversalement à la direction de transmission des forces.

3. Procédé selon la revendication 1 ou 2, **caractérisé en ce qu'**on utilise un élément de fixation qui est conçu avec une symétrie de rotation.

4. Procédé selon une des revendications précédentes, **caractérisé en ce qu'**on utilise une tige de fixation conçue avec une forme cylindrique.

5. Procédé selon une des revendications précédentes, **caractérisé en ce qu'**on utilise une tige de fixation munie d'un élargissement en forme de cône tronqué, qui forme un cône.

6. Procédé selon la revendication 5, **caractérisé en ce qu'**on utilise une tige de fixation munie d'un élargissement, dont l'angle de cône est de l'ordre de 2° environ à 8° environ.

7. Or selon la revendication 5, **caractérisé en ce qu'**on utilise une tige de fixation munie d'un élargissement, dont l'angle de cône est de l'ordre de 3° environ à 5° environ.

8. Procédé selon une des revendications précédentes, **caractérisé en ce qu'**on utilise une tête de fixation qui est munie d'une fente longitudinale qui part d'une surface d'extrémité, côté tête, de l'élément de fixation en s'étendant dans le sens de transmission des forces jusqu'à hauteur de la première contre-dépouille.

9. Procédé selon une des revendications précédentes, **caractérisé en ce qu'**on utilise un élément de fixation comprenant une tête de fixation et une tige de fixation, qui sont conçues symétriquement l'une par rapport à l'autre, une normale à la surface du plan de symétrie s'étendant colinéairement à la direction de transmission des forces et la fente longitudinale agencée sur la tête de fixation étant orientée transversalement à la fente longitudinale agencée sur la tige de fixation.

10. Procédé selon une des revendications précédentes, **caractérisé en ce que**, après l'introduction de l'élément de fixation dans les orifices des deux pièces d'assemblage, on insère dans les fentes longitudinales de l'élément de fixation une masse malléable, qui durcit ensuite.

11. Procédé selon une des revendications précédentes, **caractérisé en ce qu'**un élément de butée, qui entoure la tige de fixation dans la zone de l'élargissement, est amené en appui sur toute la surface contre la paroi latérale extérieure de l'élargissement.

12. Procédé selon la revendication 11, **caractérisé en ce que** l'élément de butée utilisé est une gaine.

13. Procédé selon la revendication 11 ou 12, **caractérisé en ce qu'**on utilise un élément de butée muni d'une forure débouchante s'élargissant en cône, l'angle du cône de la forure débouchante correspondant à l'angle de cône de l'élargissement.

14. Procédé selon la revendication 11, 12 ou 13, **caractérisé en ce qu'**on utilise un élément de butée pouvant être assemblé avec la deuxième pièce d'assemblage.

15. Procédé selon une des revendications 11 à 14, **caractérisé en ce qu'**on utilise un élément de butée pouvant être introduit dans un orifice de la deuxième pièce d'assemblage, lequel élément de butée est divisé, transversalement à la direction de transmission des forces, en plusieurs segments qui s'étendent chacun sur une zone limitée de la périphérie.

16. Procédé selon une des revendications précédentes, **caractérisé en ce qu'**on utilise un logement conçu avec une symétrie de rotation.

17. Procédé selon une des revendications précédentes, **caractérisé en ce qu'**on utilise un écarteur conçu avec une forme cylindrique.

18. Procédé selon une des revendications 1 à 16, **caractérisé en ce qu'**on utilise un écarteur conçu en forme de cône tronqué, qui forme un cône d'écartement.

19. Procédé selon une des revendications 1 à 18, **caractérisé en ce qu'**on utilise un écarteur muni d'une cannelure sur sa paroi latérale.

20. Procédé selon une des revendications 1 à 18, **caractérisé en ce qu'**on utilise un écarteur muni d'une denture sur sa paroi latérale.

21. Procédé selon une des revendications 1 à 20, **caractérisé en ce qu'**on utilise un logement dont la paroi est munie d'une denture.

22. Procédé selon une des revendications 1 à 21, **caractérisé en ce que**, dans la zone du logement située entre l'écarteur inséré et l'extrémité de l'élément de fixation, on introduit une masse malléable, qui durcit ensuite dans le logement.

23. Procédé selon une des revendications 1 à 22, **caractérisé en ce qu'**on utilise un élément de fixation divisé en deux ou plusieurs segments séparés, du fait que les fentes longitudinales s'étendent à travers l'élément de fixation.

24. Procédé de transmission des forces entre deux pièces d'assemblage, dans lequel on insère un élément de fixation dans deux orifices correspondants des deux pièces d'assemblage, sachant qu'une tête de fixation de l'élément de fixation est amenée en appui contre une première face d'appui en liaison active avec la première pièce d'assemblage, et sachant qu'une tige de fixation, partant de la tête de fixation est insérée dans l'orifice de la deuxième pièce d'assemblage,
**caractérisé en ce qu'**on utilise un élément de fixation séparé en deux ou plusieurs segments séparés au moyen d'une fente longitudinale qui s'étend à travers l'élément de fixation dans le sens de transmission des forces, lequel élément de fixation est amené en appui contre une deuxième face d'appui en liaison active avec la deuxième pièce d'assemblage, et **en ce qu'**on introduit un écarteur, destiné à écarter les segments, dans un logement de l'élément de fixation qui part d'une surface d'extrémité de l'élément de fixation en s'étendant dans le sens de transmission des forces.

25. Procédé selon une des revendications 1 à 24, **caractérisé en ce qu'**on utilise un élément de fixation muni d'un canal de passage par lequel le logement est relié à la surface d'extrémité opposée de l'élément de fixation.

26. Procédé selon la revendication 25, **caractérisé en ce que** l'écarteur est tiré à l'intérieur du logement au moyen d'un élément de traction qui passe à travers le canal de passage.

27. Procédé selon la revendication 26, **caractérisé en ce qu'**on utilise un élément de traction muni d'une zone de rupture théorique qui se brise en cas de dépassement de la contrainte de traction maximale.

28. Procédé selon la revendication 27, **caractérisé en ce qu'**on utilise un élément de traction muni d'une zone de rupture théorique conçue de telle sorte que la contrainte de traction maximale est atteinte lorsque l'écarteur parvient dans la position finale souhaitée.

29. Procédé selon la revendication 26, 27 ou 28, **caractérisé en ce qu'**on utilise un élément de traction conçu sous forme de barre de traction.

30. Procédé selon la revendication 27, 28 ou 29, **caractérisé en ce qu'**on utilise un élément de traction conçu sous forme de fil de traction ou de câble de traction.

31. Procédé selon une des revendications précédentes, **caractérisé en ce qu'**on utilise une tête de fixation munie d'une première contre-dépouille conçue sous forme de découpe annulaire dans une surface sphérique.

32. Procédé selon une des revendications précédentes, **caractérisé en ce qu'**on utilise une tige de fixation munie d'une deuxième contre-dépouille conçue sous forme de découpe annulaire dans une surface sphérique.

33. Procédé selon une des revendications 11 à 32, **caractérisé en ce qu'**on utilise un élément de butée muni d'une paroi latérale extérieure conçue sous forme de découpe annulaire dans une surface sphérique.

34. Procédé selon une des revendications 11 à 33, **caractérisé en ce qu'**une douille, entourant l'élément de butée et en appui sur toute sa surface contre la paroi latérale extérieure de celui-ci, est assemblée à la deuxième pièce d'assemblage.

35. Procédé selon la revendication 34, **caractérisé en ce qu'**on utilise une douille exerçant une précontrainte sur l'élément de butée.

36. Procédé selon la revendication 35, **caractérisé en ce qu'**on utilise une douille fendue dans le sens longitudinal.

37. Procédé selon la revendication 36, **caractérisé en ce qu'**on utilise un élément de ressort sollicitant la douille par une force radiale orientée vers l'intérieur.

38. Procédé selon une des revendications 34 à 37, **caractérisé en ce qu'**un élément d'écartement est agencé dans la douille afin de maintenir l'élément de butée à distance de la deuxième pièce d'assemblage à assembler à la douille.

39. Procédé selon la revendication 38, **caractérisé en ce qu'**on utilise un élément d'écartement conçu sous forme de bague d'écartement.

40. Procédé selon la revendication 38, **caractérisé en ce qu'**on utilise un élément d'écartement conçu sous forme de disque d'écartement, un évidement étant réalisé dans une face supérieure du disque d'écartement orientée vers l'élément de butée et l'élément de butée étant maintenu par les zones de bordure de l'évidement.

41. Procédé selon la revendication 40, **caractérisé en ce qu'**on utilise un disque d'écartement et une douille conçus de telle sorte que la paroi intérieure de la douille, orientée vers l'élément de butée, et la face supérieure du disque d'écartement, orientée vers l'élément de butée, forment, pour la paroi latérale extérieure de l'élément de butée conçue sous forme de découpe annulaire dans une surface sphérique, une surface d'appui commune constituant une découpe annulaire dans une surface sphérique.

42. Procédé selon une des revendications précédentes, **caractérisé en ce qu'**un élément de pression transmettant une force de pression est positionné entre les deux pièces d'assemblage.

43. Procédé selon la revendication 42, **caractérisé en ce qu'**on utilise un élément de pression dont le coefficient de dilatation thermique est ajusté au coefficient de dilatation thermique de l'élément de fixation.

44. Procédé selon la revendication 42 ou 43, **caractérisé en ce qu'**on utilise un élément de pression entourant de manière circulaire la tige de fixation.

45. Procédé selon la revendication 42, 43 ou 44, **caractérisé en ce qu'**on utilise un élément de pression conçu sous forme de cylindre creux.

46. Procédé selon la revendication 44 ou 45, **caractérisé en ce que** l'élément de pression est posé sur la douille, une face frontale de l'élément de pression, orientée vers la gaine, étant munie d'un évidement destiné à recevoir la zone d'extrémité de la gaine, orientée vers l'élément de pression.

47. Procédé selon une des revendications précédentes, **caractérisé en ce qu'**on utilise un élément de fixation, dont la tête de fixation et la tige de fixation comportent chacune une autre contre-dépouille, à savoir respectivement une troisième et une quatrième contre-dépouille qui s'étendent en oblique par rapport à la direction de sollicitation, ces contre-dépouilles étant opposées l'une à l'autre.

48. Procédé selon une des revendications précédentes, **caractérisé en ce qu'**on utilise un élément de fixation et/ou un écarteur réalisés dans un matériau céramique.

49. Procédé selon une des revendications 11 à 48, **caractérisé en ce qu'**on utilise un élément de butée réalisé dans un matériau céramique.

50. Procédé selon une des revendications 42 à 49, **caractérisé en ce qu'**on utilise un élément de pression réalisé dans un matériau céramique.

51. Procédé selon une des revendications 38 à 50, **caractérisé en ce qu'**on utilise un élément d'écartement réalisé dans un matériau céramique.

52. Procédé selon une des revendications précédentes, **caractérisé en ce qu'**on utilise un élément de fixation et/ou un écarteur réalisés en céramique renforcée par fibres.

53. Procédé selon une des revendications 11 à 52, **caractérisé en ce qu'**on utilise un élément de butée réalisé en céramique renforcée par fibres.

54. Procédé selon une des revendications 42 à 53, **caractérisé en ce qu'**on utilise un élément de pression réalisé en céramique renforcée par fibres.

55. Procédé selon une des revendications 38 à 54, **caractérisé en ce qu'**on utilise un élément d'écartement réalisé en céramique renforcée par fibres.

56. Procédé selon une des revendications 11 à 55, **caractérisé en ce qu'**on utilise un élément de butée isolant thermique et/ou isolant électrique.

57. Procédé selon une des revendications 38 à 56, **caractérisé en ce qu'**on utilise un élément d'écartement isolant thermique et/ou isolant électrique.

58. Procédé selon une des revendications 34 à 57, **caractérisé en ce qu'**on utilise une douille réalisée dans un matériau élastique et à déformation plastique.

59. Procédé selon une des revendications 26 à 58, **caractérisé en ce qu'**on utilise un outil de montage à faire entrer en prise avec l'élément de traction et exerçant une force de traction contrôlée sur l'élément de traction.

60. Procédé selon la revendication 59, **caractérisé en ce qu'**on utilise un outil de montage, qui est muni d'un dispositif de mesure, qui détecte la position de l'écarteur à l'intérieur du logement et/ou détecte la force de traction exercée sur l'élément de traction.

61. Procédé selon la revendication 59 ou 60, **caractérisé en ce qu'**on utilise un outil de montage à mettre en appui sur la tête de fixation pour exercer une force de traction sur l'élément de traction.

62. Dispositif de transmission des forces entre une première pièce d'assemblage (10 ; 71 ; 95 ; 114 ; 130) et une deuxième pièce d'assemblage (12 ; 72 ; 96 ; 115 ; 131), destiné en particulier à la mise en oeuvre du procédé selon une des revendications précédentes,
- comprenant la deuxième pièce d'assemblage (12 ; 72 ; 96 ; 115 ; 131),
- avec un élément de fixation (18 ; 54 ; 70 ; 101 ; 116 ; 134), qui comprend
- une tête de fixation (20 ; 55 ; 74 ; 102 ; 117 ; 135) avec une première contre-dépouille (30 ; 58 ; 77 ; 120) qui s'étend en oblique par rapport à la direction de transmission des forces (28), ainsi que
- une tige de fixation (24 ; 56 ; 75 ; 103 ; 118 ; 136), qui part de la tête de fixation (20 ; 55 ; 74 ; 102 ; 117 ; 135) et comporte un élargissement (34 ; 138), qui est muni d'une deuxième contre-dépouille (42 ; 59 ; 76 ; 121 ; 140) orientée vers la première contre-dépouille (30 ; 58 ; 77 ; 120), et une fente longitudinale (48 ; 64, 65 ; 75a ; 105 ; 142) qui part d'une surface d'extrémité (36 ; 63 ; 79 ; 104 ; 144), côté tige, de l'élément de fixation (18 ; 54 ; 70 ; 101 ; 116 ; 134) en s'étendant dans la direction de transmission des forces (28) jusqu'à hauteur de l'élargissement (34 ; 138),
- et avec un écarteur (52 ; 67 ; 84 ; 125) destiné à dilater la tige de fixation (24 ; 56 ; 75 ; 103 ; 118 ; 136) dans la zone de l'élargissement (34 ; 138), lequel écarteur peut être introduit dans un logement (50 ; 66 ; 81 ; 124 ; 141) de l'élément de fixation (18 ; 54 ; 70 ; 101 ; 116 ; 134), lequel part d'une surface d'extrémité (38 ; 62 ; 79) de l'élément de fixation (18 ; 54 ; 70 ; 101 ; 116 ; 134) en s'étendant dans le sens de transmission des forces (28) jusqu'à hauteur de la fente longitudinale (48 ; 64, 65 ; 75a ; 105 ; 142)
**caractérisé en ce que**
la tige de fixation (24 ; 56 ; 75 ; 103 ; 118 ; 136) est conçue de telle sorte que, avant l'introduction de l'écarteur (52 ; 67 ; 84 ; 125) dans le logement (50 ; 66 ; 81 ; 124 ; 141) de l'élément de fixation (18 ; 54 ; 70 ; 101 ; 116 ; 134), elle peut être amenée en appui avec la deuxième contre-dépouille (42 ; 59 ; 76 ; 121 ; 140) avec toute la surface contre une deuxième face d'appui correspondant avec la deuxième contre-dépouille (42 ; 59 ; 76 ; 121 ; 140), la deuxième face d'appui étant en liaison active avec la deuxième pièce d'assemblage (12 ; 72 ; 96 ; 115 ; 131) de telle sorte que la force pouvant être exercée par la deuxième contre-dépouille (42 ; 59 ; 76 ; 121 ; 140) sur la deuxième face d'appui peut être transmise sur la deuxième pièce d'assemblage (12 ; 72 ; 96 ; 115 ; 131).

63. Dispositif selon la revendication 62, **caractérisé en ce que** l'élément de fixation (54) comporte plusieurs fentes longitudinales (64, 65) qui se croisent en leur milieu transversalement à la direction de transmission des forces (28).

64. Dispositif selon la revendication 62 ou 63, **caractérisé en ce que** l'élément de fixation (18 ; 54 ; 70 ; 101 ; 116 ; 134) est conçu avec une symétrie de rotation.

65. Dispositif selon la revendication 62, 63 ou 64, **caractérisé en ce que** la tige de fixation (24 ; 56 ; 75 ; 103 ; 118 ; 136) est conçue avec une forme cylindrique.

66. Dispositif selon une des revendications 62 à 65, **caractérisé en ce que** l'élargissement (34 ; 138) est conçu en forme de cône tronqué et forme un cône.

67. Dispositif selon la revendication 66, **caractérisé en ce que** l'élargissement (34 ; 138) comporte un angle de cône de l'ordre de 2° environ à 8° environ.

68. Dispositif selon la revendication 66, **caractérisé en ce que** l'élargissement (34 ; 138) comporte un angle de cône de l'ordre de 3° environ à 5° environ.

69. Dispositif selon une des revendications 62 à 68, **caractérisé en ce que** la tête de fixation (55 ; 135) est munie d'une fente longitudinale (64 ; 142) qui part d'une surface d'extrémité (62 ; 143), côté tête, de l'élément de fixation (54 ; 134) en s'étendant dans la direction de transmission des forces (28) jusqu'à hauteur de la première contre-dépouille (58).

70. Dispositif selon une des revendications 62 à 69, **caractérisé en ce que** la tête de fixation (55 ; 117) et la tige de fixation (56 ; 118) sont conçues symétriquement l'une par rapport à l'autre, une normale à la surface du plan de symétrie (57 ; 119) s'étendant colinéairement à la direction de transmission des forces (28) et la fente longitudinale (64 ; 142) agencée sur la tête de fixation (55 ; 117) étant orientée transversalement à la fente longitudinale (65 ; 142) agencée sur la tige de fixation (56 ; 118).

71. Dispositif selon une des revendications 62 à 70, **caractérisé en ce que** le dispositif comporte une masse malléable pouvant être insérée dans les fentes longitudinales (48 ; 64, 65 ; 75a ; 105 ; 142) de l'élément de fixation (18 ; 54 ; 70 ; 101 ; 116 ; 134) et durcissant ensuite dans les fentes longitudinales.

72. Dispositif selon une des revendications 62 à 71, **caractérisé en ce que** le dispositif comporte un élément de butée (44 ; 85 ; 106 ; 145), qui entoure la tige de fixation (24 ; 56 ; 75 ; 103 ; 118 ; 136) dans la zone de l'élargissement (34 ; 138) et pouvant être amené en appui sur toute la surface contre la paroi latérale extérieure (40) de l'élargissement (34 ; 138).

73. Dispositif selon la revendication 72, **caractérisé en ce que** l'élément de butée est conçu sous forme de gaine (44 ; 85 ; 106 ; 145).

74. Dispositif selon la revendication 72 ou 73, **caractérisé en ce que** l'élément de butée (44 ; 85) est muni d'une forure débouchante (46 ; 86) s'élargissant en cône, l'angle du cône de la forure débouchante (46 ; 86) correspondant à l'angle de cône de l'élargissement (34).

75. Dispositif selon la revendication 72, 73 ou 74, **caractérisé en ce que** l'élément de butée (44 ; 85 ; 106 ; 145) peut être assemblé avec la deuxième pièce d'assemblage (12 ; 72 ; 96 ; 115 ; 131).

76. Dispositif selon une des revendications 72 à 75, **caractérisé en ce que** l'élément de butée peut être introduit dans un orifice de la deuxième pièce d'assemblage et est divisé, transversalement à la direction de transmission des forces, en plusieurs segments qui s'étendent chacun sur une zone limitée de la périphérie.

77. Dispositif selon une des revendications 62 à 76, **caractérisé en ce que** le logement (50 ; 66 ; 81 ; 124 ; 141) est conçu avec une symétrie de rotation.

78. Dispositif selon une des revendications 62 à 77, **caractérisé en ce que** l'écarteur (52 ; 67 ; 125) est conçu avec une forme cylindrique.

79. Dispositif selon une des revendications 62 à 77, **caractérisé en ce que** l'écarteur est conçu en forme de cône tronqué et forme un cône d'écartement (84).

80. Dispositif selon une des revendications 62 à 79, **caractérisé en ce que** l'écarteur est muni d'une cannelure sur sa paroi latérale.

81. Dispositif selon une des revendications 62 à 79, **caractérisé en ce que** l'écarteur est muni d'une denture sur sa paroi latérale.

82. Dispositif selon une des revendications 62 à 81, **caractérisé en ce que** la paroi du logement est munie d'une denture.

83. Dispositif selon une des revendications 62 à 82, **caractérisé en ce que** le dispositif comporte une masse malléable qui peut être insérée dans la zone du logement (81) située entre l'écarteur (84) inséré et la surface d'extrémité (79) de l'élément de fixation (70) et qui durcit ensuite dans le logement (81).

84. Dispositif selon une des revendications 62 à 83, **caractérisé en ce que** la fente longitudinale s'étend à travers l'élément de fixation et divise l'élément de fixation en deux segments séparés.

85. Dispositif destiné à la mise en oeuvre du procédé selon une des revendications 1 à 61, comprenant un élément de fixation muni d'une tête de fixation et d'une tige de fixation, **caractérisé en ce que** l'élément de fixation est séparé en deux ou plusieurs segments séparés au moyen d'une fente longitudinale qui s'étend à travers l'élément de fixation dans la direction de transmission des forces, et **en ce que** le dispositif comporte un écarteur, destiné à écarter les segments et qui peut être introduit dans un logement de l'élément de fixation qui part d'une surface d'extrémité de l'élément de fixation en s'étendant dans la direction de transmission des forces.

86. Dispositif selon une des revendications 62 à 85, **caractérisé en ce que** l'élément de fixation (70) est muni d'un canal de passage (80), par lequel le logement (81) est relié à la surface d'extrémité (78) opposée de l'élément de fixation (70).

87. Dispositif selon la revendication 86, **caractérisé en ce que** le dispositif comporte un élément de traction (82) qui passe à travers le canal de passage (80) et qui est destiné à tirer l'écarteur (84) à l'intérieur du logement (81).

88. Dispositif selon la revendication 87, **caractérisé en ce que** l'élément de traction (82) est muni d'une zone de rupture théorique qui se brise en cas de dépassement de la contrainte de traction maximale.

89. Dispositif selon la revendication 88, **caractérisé en ce que** la zone de rupture théorique est conçue de telle sorte que la contrainte de traction maximale est atteinte lorsque l'écarteur (84) parvient dans la position finale souhaitée à l'intérieur du logement (81).

90. Dispositif selon la revendication 87, 88 ou 89, **caractérisé en ce que** l'élément de traction (82) est conçu sous forme de barre de traction.

91. Dispositif selon la revendication 87, 88 ou 89, **caractérisé en ce que** l'élément de traction est conçu sous forme de fil de traction (82).

92. Dispositif selon une des revendications 62 à 91, **caractérisé en ce que** la première contre-dépouille (77) sur la tête de fixation (74) est conçue sous forme de découpe annulaire dans une surface sphérique.

93. Dispositif selon une des revendications 62 à 92, **caractérisé en ce que** la deuxième contre-dépouille sur la tige de fixation est conçue sous forme de découpe annulaire dans une surface sphérique.

94. Dispositif selon une des revendications 72 à 93, **caractérisé en ce qu'**une paroi latérale extérieure (87) de l'élément de butée (85), entourant la tige de fixation (75) dans la zone de l'élargissement, est conçue sous forme de découpe annulaire dans une surface sphérique.

95. Dispositif selon une des revendications 72 à 94, **caractérisé en ce que** le dispositif comporte une douille (89 ; 89a ; 89b ; 89c ; 107), qui entoure l'élément de butée (85, 106), qui peut venir en appui sur toute sa surface contre la paroi latérale extérieure (87) de celui-ci et qui peut être assemblée à la deuxième pièce d'assemblage (72 ; 96).

96. Dispositif selon la revendication 95, **caractérisé en ce que** la douille (89a ; 89b ; 89c) exerce une précontrainte sur l'élément de butée (85).

97. Dispositif selon la revendication 96, **caractérisé en ce que** la douille (89a ; 89b ; 89c) est fendue.

98. Dispositif selon la revendication 97, **caractérisé en ce que** le dispositif comporte un élément de ressort (93 ; 94) qui sollicite la douille (89b ; 89c) par une force radiale orientée vers l'intérieur.

99. Dispositif selon une des revendications 95 à 98, **caractérisé en ce que** le dispositif comporte un élément d'écartement (90) qui est agencé dans la douille (89) et maintient l'élément de butée (85) à distance de la deuxième pièce d'assemblage (72) à assembler à la douille (89).

100. Dispositif selon la revendication 99, **caractérisé en ce que** l'élément d'écartement (90) est conçu sous forme de bague d'écartement.

101. Dispositif selon la revendication 99, **caractérisé en ce que** l'élément d'écartement conçu sous forme de disque d'écartement (90), un évidement (92) étant réalisé dans une face supérieure (91), orientée vers l'élément de butée (85), dudit disque d'écartement et l'élément de butée (85) étant maintenu par les zones de bordure de l'évidemen (92).

102. Dispositif selon la revendication 101, **caractérisé en ce que** la face supérieure (91) de l'évidement (92) orientée vers l'élément de butée (85) et la paroi intérieure (88) de la douille (89), orientée vers l'élément de butée (85) forment, pour la paroi latérale extérieure (87) de l'élément de butée (85) conçue sous forme de découpe annulaire dans une surface sphérique, une surface d'appui commune constituant une découpe annulaire dans une surface sphérique.

103. Dispositif selon une des revendications 62 à 102, **caractérisé en ce que** le dispositif comporte un élément de pression (110), qui transmet une force de pression et est positionné entre les deux pièces d'assemblage (95, 96).

104. Dispositif selon la revendication 103, **caractérisé en ce que** le coefficient de dilatation thermique de l'élément de pression (110) est ajusté au coefficient de dilatation thermique de l'élément de fixation (101).

105. Dispositif selon la revendication 103 ou 104, **caractérisé en ce que** l'élément de pression (110) entoure de manière circulaire la tige de fixation (103).

106. Dispositif selon la revendication 103, 104 ou 105, **caractérisé en ce que** l'élément de pression est conçu sous forme de cylindre creux (110).

107. Dispositif selon la revendication 105 ou 106, **caractérisé en ce que** l'élément de pression (110) peut être posé sur la douille (107) et comporte, sur une face frontale orientée vers la douille, un évidement destiné à recevoir une zone d'extrémité (108), orientée vers l'élément de pression, de la douille.

108. Dispositif selon une des revendications 62 à 107, **caractérisé en ce que** la tête de fixation (117) et la tige de fixation (118) comportent chacune une autre contre-dépouille, à savoir respectivement une troisième et une quatrième contre-dépouille (122 et 123) qui s'étendent en oblique par rapport au sens de sollicitation, ces contre-dépouilles (122, 123) étant opposées l'une à l'autre.

109. Dispositif selon une des revendications 62 à 108, **caractérisé en ce que** l'élément de fixation et/ou l'écarteur sont réalisés dans un matériau céramique.

110. Dispositif selon une des revendications 72 à 109, **caractérisé en ce que** l'élément de butée est réalisé dans un matériau céramique.

111. Dispositif selon une des revendications 103 à 110, **caractérisé en ce que** l'élément de pression est réalisé dans un matériau céramique.

112. Dispositif selon une des revendications 99 à 111, **caractérisé en ce que** l'élément d'écartement est réalisé dans un matériau céramique.

113. Dispositif selon une des revendications 62 à 112, **caractérisé en ce que** l'élément de fixation et/ou l'écarteur sont réalisés en céramique renforcée par fibres.

114. Dispositif selon une des revendications 72 à 113, **caractérisé en ce que** l'élément de butée est réalisé en céramique renforcée par fibres.

115. Dispositif selon une des revendications 103 à 114, **caractérisé en ce que** l'élément de pression est réalisé en céramique renforcée par fibres.

116. Dispositif selon une des revendications 99 à 115, **caractérisé en ce que** l'élément d'écartement est réalisé en céramique renforcée par fibres.

117. Dispositif selon une des revendications 72 à 116, **caractérisé en ce que** l'élément de butée est réalisé dans un matériau isolant thermique et/ou isolant électrique.

118. Dispositif selon une des revendications 99 à 117, **caractérisé en ce que** l'élément d'écartement est réalisé dans un matériau isolant thermique et/ou isolant électrique.

119. Dispositif selon une des revendications 95 à 118, **caractérisé en ce que** la douille est réalisée dans un matériau élastique et à déformation plastique.

120. Dispositif selon l'une des revendications 87 à 119, **caractérisé en ce que** le dispositif est conçu sous forme d'unité de montage et comprend un outil de montage (160) à faire entrer en prise avec l'élément de traction (82) et exerçant une force de traction contrôlée sur l'élément de traction (82).

121. Procédé selon la revendication 120, **caractérisé en ce que** l'outil de montage (160) est muni d'un dispositif de mesure, qui détecte la position de l'écarteur (84) à l'intérieur du logement (81) et/ou détecte la force de traction exercée sur l'élément de traction (82).

122. Procédé selon la revendication 120 ou 121, **caractérisé en ce que** l'outil de montage (160) est destiné à venir en appui sur la tête de fixation (162) pour exercer une force de traction sur l'élément de traction (82).
